(19) Europäisches Patentamt
European Patent Office
Office européen des brevets

(11) **EP 4 694 507 A1**

(12) **EUROPEAN PATENT APPLICATION**
published in accordance with Art. 153(4) EPC

(43) Date of publication:
**11.02.2026  Bulletin 2026/07**

(21) Application number: **24784002.8**

(22) Date of filing: **06.03.2024**

(51) International Patent Classification (IPC):
**H04W 72/40** (2023.01)

(52) Cooperative Patent Classification (CPC):
**H04W 72/0446; H04W 72/0453; H04W 72/12; H04W 72/40; H04W 76/14**

(86) International application number:
**PCT/CN2024/080229**

(87) International publication number:
**WO 2024/207917 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023  CN 202310367788**

(71) Applicant: **Datang Mobile Communications Equipment Co., Ltd.
Beijing 100085 (CN)**

(72) Inventors:
• **REN, Xiaotao**
  **Beijing 100085 (CN)**
• **REN, Bin**
  **Beijing 100085 (CN)**

(74) Representative: **Maiwald GmbH
Elisenhof
Elisenstraße 3
80335 München (DE)**

(54) **INFORMATION TRANSMISSION METHOD, APPARATUS AND DEVICE**

(57)    The present disclosure provides an information transmission method, device and apparatus, and belongs to the technical field of communications. The information transmission method includes: transmitting first control information to a first user equipment. The first control information is used to schedule a first sidelink positioning reference signal (SL-PRS). The first device is a network device or a second user equipment, and the first control information is information related to a transmission resource of the first SL-PRS.

transmitting first control information to a first user equipment; where the first control information is used to schedule a first sidelink positioning reference signal (SL-PRS), the first device is a network device or a second user equipment, and the first control information is information related to a transmission resource of the first SL-PRS

31

FIG. 3

## Description

### CROSS-REFERENCE TO RELATED APPLICATION

The present application is filed based on and claims the priority of Chinese Application No. 202310367788.9 filed on April 7, 2023, entitled "information transmission method, device and apparatus", the disclosure of which are incorporated in their entireties by reference herein.

### TECHNICAL FIELD

The present disclosure relates to the field of communication technologies, and in particular, to an information transmission method, device and apparatus.

### BACKGROUND

In the New Radio (NR) positioning technology of the related art, only scheduling of downlink positioning reference signal and uplink positioning reference signal is defined in an air interface between a base station and a user equipment; and scheduling of sidelink positioning reference signal (SL-PRS) is not defined in proximity communication port 5 (PC5) interface between a user equipment and another user equipment. However, considering the relative positioning between user equipment, i.e., the demand for sidelink positioning, it is necessary to introduce the scheduling of the sidelink positioning reference signal between the user equipment, so that the user equipment cannot rely on the downlink positioning reference signal or the uplink positioning reference signal, but directly use SL-PRS to complete the relative positioning process between the user equipment (that is, the user equipment cannot rely on the base station, but directly complete the positioning process in the sidelink). However, there is no relevant content for SL-PRS scheduling in the current solution, which makes it impossible for the user equipment to clearly identify relevant transmission resources, and thus it is impossible to accurately achieve sidelink positioning.

In view of this, there is a problem in the related art that the user equipment cannot determine various resource information of to-be-received SL-PRS transmission.

### SUMMARY

An object of the present disclosure is to provide an information transmission method, device and apparatus, which can solve the problem in the related art that the user equipment cannot determine various resource information of to-be-received SL-PRS transmission.

In order to solve the above technical problem, one embodiment of the present disclosure provides an information transmission method applied to a first device, which includes:

transmitting first control information to a first user equipment; wherein the first control information is used to schedule a first sidelink positioning reference signal (SL-PRS);

wherein the first device is a network device or a second user equipment, and the first control information is information related to a transmission resource of the first SL-PRS.

In some embodiments, the first control information includes at least one of the following:

first resource pool information;

first time-frequency resource information, wherein the first time-frequency resource information is information of time-frequency resources occupied by the first SL-PRS;

second time-frequency resource information, wherein the second time-frequency resource information is information of time-frequency resource occupied by a physical sidelink control channel (PSCCH);

first pattern information, wherein the first pattern information is pattern information related to the first SL-PRS;

first time interval information;

first priority information;

first location information;

first index number information, wherein the first index number information is index number information of the first SL-PRS;

second index number information, wherein the second index number information is index number information of the user equipment;

first cast type information; or,

first measurement reporting information.

In some embodiments, the first resource pool information includes type information of a first resource pool, and the type information is used to indicate that the first resource pool includes a dedicated resource pool and/or a shared resource pool;

and/or, the first resource pool information includes index number information of the first resource pool;
and/or, the first resource pool is at least one resource pool configured for the first SL-PRS.

In some embodiments, the dedicated resource pool is a resource pool dedicated to the first SL-PRS and channels related to an SL-PRS; and/or, the shared resource pool is a resource pool shared by the first SL-PRS and channels related to sidelink communication.

In some embodiments, the first control information is first downlink control information or first sidelink control information;

and/or, the first control information is carried by a first control channel or a second control channel; the first control channel is physical downlink control channel (PDCCH), and the second control channel is PSCCH.

In some embodiments, the first time-frequency resource information includes at least one of information of time domain resources occupied by the first SL-PRS and information of frequency domain resources occupied by the first SL-PRS.

In some embodiments, the information of time domain resources occupied by the first SL-PRS includes at least one of a starting orthogonal frequency division multiplex (OFDM) symbol index number, an ending OFDM symbol index number and the number of OFDM symbols occupied by the first SL-PRS;

and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In some embodiments, the second time-frequency resource information includes at least one of information of time domain resources occupied by the PSCCH and information of frequency domain resources occupied by the PSCCH.

In some embodiments, the PSCCH is associated with the first SL-PRS, and the PSCCH indicates information of time-frequency resources occupied by the first SL-PRS.

In some embodiments, the information of the time domain resources occupied by the PSCCH includes at least one of a starting OFDM symbol index number, an ending OFDM symbol index number and the number of OFDM symbols occupied by the PSCCH;

and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

In some embodiments, the OFDM symbol index number includes at least one of an OFDM symbol index number within a slot, an OFDM symbol index number within a subframe, and an OFDM symbol index number within a radio frame.

In some embodiments, the OFDM symbol index number in the radio frame includes: a system frame number, a slot number, and an OFDM symbol index number in the slot.

In some embodiments, the first pattern information includes at least one of resource element offset information, comb information and mapping pattern information.

In some embodiments, the resource element offset information includes at least one of a resource element offset and a resource element offset sequence;

and/or, the comb information includes at least one of a comb size and a comb index number.

In some embodiments, the first time interval information is a slot offset or time interval between a slot where the first control information is located and transmission or first transmission of the first SL-PRS.

In some embodiments, a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;
$T_2$ is a timing advance value corresponding to a timing advance group (TAG) of a service cell that receives the first control information;
M is a slot offset or time interval between the slot where the first control information is located and the transmission or first transmission of the first SL-PRS;
$T_3$ is a duration of the sidelink slot.

In some embodiments, the first priority information is information related to transmission priority of the first SL-PRS.

In some embodiments, the first location information includes at least one of a zone identifier of a transmitting user equipment of the first SL-PRS and a zone identifier of a receiving user equipment of the first SL-PRS.

In some embodiments, the first index number information includes at least one of index number information of a first SL-PRS resource, and index number information of a first SL-PRS resource set.

In some embodiments, the second index number information includes at least one of index number information of a transmitting user equipment of the first SL-PRS, and index number information of a receiving user equipment of the first SL-PRS.

In some embodiments, the first cast type information is used to indicate that the first SL-PRS is at least one type of unicast, multicast and broadcast.

In some embodiments, the first measurement reporting information is used to indicate that a measurement report related to the first SL-PRS is transmitted to a location management function (LMF) device, or to the second user equipment, or to a third user equipment other than the first user equipment and the second user equipment, or to the network device.

In some embodiments, the method further includes:

determining a target resource location based on the first control information; and
transmitting the first SL-PRS at the target resource location.

In some embodiments, the method further includes:
determining sidelink positioning information for the first user equipment according to the first SL-PRS.

One embodiment of the present disclosure further provides an information transmission method, applied to a first user equipment, including:

receiving first control information transmitted by a first device; wherein the first control information is used to schedule a first SL-PRS;
wherein the first device is a network device or a second user equipment, and the first control information is information related to a transmission resource of the first SL-PRS.

In some embodiments, the first control information includes at least one of the following:

first resource pool information;
first time-frequency resource information, wherein the first time-frequency resource information is information of time-frequency resources occupied by the first SL-PRS;
second time-frequency resource information, wherein the second time-frequency resource information is information of time-frequency resource occupied by a physical sidelink control channel (PSCCH);
first pattern information, wherein the first pattern information is pattern information related to the first SL-PRS;
first time interval information;
first priority information;
first location information;
first index number information, wherein the first index number information is index number information of the first SL-PRS;
second index number information, wherein the second index number information is index number information of the user equipment;
first cast type information; or,
first measurement reporting information.

In some embodiments, the first resource pool information includes type information of a first resource pool, and the type information is used to indicate that the first resource pool includes a dedicated resource pool and/or a shared resource pool;

and/or, the first resource pool information includes index number information of the first resource pool;
and/or, the first resource pool is at least one resource pool configured for the first SL-PRS.

In some embodiments, the dedicated resource pool is a resource pool dedicated to the first SL-PRS and channels related to an SL-PRS; and/or, the shared resource pool is a resource pool shared by the first SL-PRS and channels related to sidelink communication.

In some embodiments, the first control information is first downlink control information or first sidelink control information;

and/or, the first control information is carried by a first control channel or a second control channel; the first control channel is physical downlink control channel (PDCCH), and the second control channel is PSCCH.

In some embodiments, the first time-frequency resource information includes at least one of information of time domain resources occupied by the first SL-PRS and information of frequency domain resources occupied by the first SL-PRS.

In some embodiments, the information of time domain resources occupied by the first SL-PRS includes at least one of a starting orthogonal frequency division multiplex (OFDM) symbol index number, an ending OFDM symbol index number and the number of OFDM symbols occupied by the first SL-PRS;

and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In some embodiments, the second time-frequency resource information includes at least one of information of time domain resources occupied by the PSCCH and information of frequency domain resources occupied by the PSCCH.

In some embodiments, the PSCCH is associated with the first SL-PRS, and the PSCCH indicates information of time-frequency resources occupied by the first SL-PRS.

In some embodiments, the information of the time domain resources occupied by the PSCCH includes at least one of a starting OFDM symbol index number, an ending OFDM symbol index number and the number of OFDM symbols occupied by the PSCCH;

and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

In some embodiments, the OFDM symbol index number includes at least one of an OFDM symbol index number within a slot, an OFDM symbol index number within a subframe, and an OFDM symbol index number within a radio frame.

In some embodiments, the OFDM symbol index number in the radio frame includes: a system frame number, a slot number, and an OFDM symbol index number in the slot.

In some embodiments, he first pattern information includes at least one of resource element offset information, comb information and mapping pattern information.

In some embodiments, the resource element offset information includes at least one of a resource element offset and a resource element offset sequence;

and/or, the comb information includes at least one of a comb size and a comb index number.

In some embodiments, the first time interval information is a slot offset or time interval between a slot where the first control information is located and transmission or first transmission of the first SL-PRS.

In some embodiments, a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;

$T_2$ is a timing advance value corresponding to a timing advance group (TAG) of a service cell that receives the first control information;

M is a slot offset or time interval between the slot where the first control information is located and the transmission or first transmission of the first SL-PRS;

$T_3$ is a duration of the sidelink slot.

In some embodiments, the first priority information is information related to transmission priority of the first SL-PRS.

In some embodiments, the first location information includes at least one of a zone identifier of a transmitting user equipment of the first SL-PRS and a zone identifier of a receiving user equipment of the first SL-PRS.

In some embodiments, the first index number information includes at least one of index number information of a first SL-PRS resource, and index number information of a first SL-PRS resource set.

In some embodiments, the second index number information includes at least one of index number information of a transmitting user equipment of the first SL-PRS, and index number information of a receiving user equipment of the first SL-PRS.

In some embodiments, the first cast type information is used to indicate that the first SL-PRS is at least one type of unicast, multicast and broadcast.

In some embodiments, the first measurement reporting information is used to indicate that a measurement report related to the first SL-PRS is transmitted to a location management function (LMF) device, or to the second user equipment, or to a third user equipment other than the first user equipment and the second user equipment, or to the network device.

In some embodiments, the method further includes:

determining a target resource location based on the first control information; and
receiving the first SL-PRS at the target resource location.

In some embodiments, the method further includes:
determining sidelink positioning information for the first user equipment according to the first SL-PRS.
One embodiment of the present disclosure further provides an information transmission device, which is a first device, including: a memory, a transceiver, and a processor;
wherein the memory is used to store a computer program; the transceiver is used to transmit and receive data under the control of the processor; the processor is used to read the computer program in the memory and perform the following operations:

transmitting first control information to a first user equipment through the transceiver; wherein the first control information is used to schedule a first sidelink positioning reference signal (SL-PRS);
wherein the first device is a network device or a second user equipment, and the first control information is information related to a transmission resource of the first SL-PRS.

In some embodiments, the first control information includes at least one of the following:

first resource pool information;
first time-frequency resource information, wherein the first time-frequency resource information is information of time-frequency resources occupied by the first SL-PRS;
second time-frequency resource information, wherein the second time-frequency resource information is information of time-frequency resource occupied by a physical sidelink control channel (PSCCH);
first pattern information, wherein the first pattern information is pattern information related to the first SL-PRS;
first time interval information;
first priority information;
first location information;
first index number information, wherein the first index number information is index number information of the first SL-PRS;
second index number information, wherein the second index number information is index number information of the user equipment;
first cast type information; or,
first measurement reporting information.

In some embodiments, the first resource pool information includes type information of a first resource pool, and the type information is used to indicate that the first resource pool includes a dedicated resource pool and/or a shared resource pool;

and/or, the first resource pool information includes index number information of the first resource pool;
and/or, the first resource pool is at least one resource pool configured for the first SL-PRS.

In some embodiments, the dedicated resource pool is a resource pool dedicated to the first SL-PRS and channels related to an SL-PRS; and/or, the shared resource pool is a resource pool shared by the first SL-PRS and channels related to sidelink communication.
In some embodiments, the first control information is first downlink control information or first sidelink control information;
and/or, the first control information is carried by a first control channel or a second control channel; the first control channel is physical downlink control channel (PDCCH), and the second control channel is PSCCH.
In some embodiments, the first time-frequency resource information includes at least one of information of time domain resources occupied by the first SL-PRS and information of frequency domain resources occupied by the first SL-PRS.
In some embodiments, the information of time domain resources occupied by the first SL-PRS includes at least one of a starting orthogonal frequency division multiplex (OFDM) symbol index number, an ending OFDM symbol index number and the number of OFDM symbols occupied by the first SL-PRS;
and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.
In some embodiments, the second time-frequency resource information includes at least one of information of time domain resources occupied by the PSCCH and information of frequency domain resources occupied by the PSCCH.

In some embodiments, the PSCCH is associated with the first SL-PRS, and the PSCCH indicates information of time-frequency resources occupied by the first SL-PRS.

In some embodiments, the information of the time domain resources occupied by the PSCCH includes at least one of a starting OFDM symbol index number, an ending OFDM symbol index number and the number of OFDM symbols occupied by the PSCCH;

and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

In some embodiments, the OFDM symbol index number includes at least one of an OFDM symbol index number within a slot, an OFDM symbol index number within a subframe, and an OFDM symbol index number within a radio frame.

In some embodiments, the OFDM symbol index number in the radio frame includes: a system frame number, a slot number, and an OFDM symbol index number in the slot.

In some embodiments, the first pattern information includes at least one of resource element offset information, comb information and mapping pattern information.

In some embodiments, the resource element offset information includes at least one of a resource element offset and a resource element offset sequence;

and/or, the comb information includes at least one of a comb size and a comb index number.

In some embodiments, the first time interval information is a slot offset or time interval between a slot where the first control information is located and transmission or first transmission of the first SL-PRS.

In some embodiments, a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;

$T_2$ is a timing advance value corresponding to a timing advance group (TAG) of a service cell that receives the first control information;

M is a slot offset or time interval between the slot where the first control information is located and the transmission or first transmission of the first SL-PRS;

$T_3$ is a duration of the sidelink slot.

In some embodiments, the first priority information is information related to transmission priority of the first SL-PRS.

In some embodiments, the first location information includes at least one of a zone identifier of a transmitting user equipment of the first SL-PRS and a zone identifier of a receiving user equipment of the first SL-PRS.

In some embodiments, the first index number information includes at least one of index number information of a first SL-PRS resource, and index number information of a first SL-PRS resource set.

In some embodiments, the second index number information includes at least one of index number information of a transmitting user equipment of the first SL-PRS, and index number information of a receiving user equipment of the first SL-PRS.

In some embodiments, the first cast type information is used to indicate that the first SL-PRS is at least one type of unicast, multicast and broadcast.

In some embodiments, the first measurement reporting information is used to indicate that a measurement report related to the first SL-PRS is transmitted to a location management function (LMF) device, or to the second user equipment, or to a third user equipment other than the first user equipment and the second user equipment, or to the network device.

In some embodiments, the operations further include:

determining a target resource location based on the first control information; and
transmitting the first SL-PRS at the target resource location.

In some embodiments, the operations further include:
determining sidelink positioning information for the first user equipment according to the first SL-PRS.

One embodiment of the present disclosure further provides an information transmission device, which is a first user equipment, including: a memory, a transceiver, and a processor;

wherein the memory is used to store a computer program; the transceiver is used to transmit and receive data under the control of the processor; the processor is used to read the computer program in the memory and perform the following operations:

receiving, through the transceiver, first control information transmitted by a first device; wherein the first control information is used to schedule a first SL-PRS;

wherein the first device is a network device or a second user equipment, and the first control information is information related to a transmission resource of the first SL-PRS.

In some embodiments, the first control information includes at least one of the following:

first resource pool information;
first time-frequency resource information, wherein the first time-frequency resource information is information of time-frequency resources occupied by the first SL-PRS;
second time-frequency resource information, wherein the second time-frequency resource information is information of time-frequency resource occupied by a physical sidelink control channel (PSCCH);
first pattern information, wherein the first pattern information is pattern information related to the first SL-PRS;
first time interval information;
first priority information;
first location information;
first index number information, wherein the first index number information is index number information of the first SL-PRS;
second index number information, wherein the second index number information is index number information of the user equipment;
first cast type information; or,
first measurement reporting information.

In some embodiments, the first resource pool information includes type information of a first resource pool, and the type information is used to indicate that the first resource pool includes a dedicated resource pool and/or a shared resource pool;

and/or, the first resource pool information includes index number information of the first resource pool;
and/or, the first resource pool is at least one resource pool configured for the first SL-PRS.

In some embodiments, the dedicated resource pool is a resource pool dedicated to the first SL-PRS and channels related to an SL-PRS; and/or, the shared resource pool is a resource pool shared by the first SL-PRS and channels related to sidelink communication.

In some embodiments, the first control information is first downlink control information or first sidelink control information;
and/or, the first control information is carried by a first control channel or a second control channel; the first control channel is physical downlink control channel (PDCCH), and the second control channel is PSCCH.

In some embodiments, the first time-frequency resource information includes at least one of information of time domain resources occupied by the first SL-PRS and information of frequency domain resources occupied by the first SL-PRS.

In some embodiments, the information of time domain resources occupied by the first SL-PRS includes at least one of a starting orthogonal frequency division multiplex (OFDM) symbol index number, an ending OFDM symbol index number and the number of OFDM symbols occupied by the first SL-PRS;
and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In some embodiments, the second time-frequency resource information includes at least one of information of time domain resources occupied by the PSCCH and information of frequency domain resources occupied by the PSCCH.

In some embodiments, the PSCCH is associated with the first SL-PRS, and the PSCCH indicates information of time-frequency resources occupied by the first SL-PRS.

In some embodiments, the information of the time domain resources occupied by the PSCCH includes at least one of a starting OFDM symbol index number, an ending OFDM symbol index number and the number of OFDM symbols occupied by the PSCCH;
and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

In some embodiments, the OFDM symbol index number includes at least one of an OFDM symbol index number within a slot, an OFDM symbol index number within a subframe, and an OFDM symbol index number within a radio frame.

In some embodiments, the OFDM symbol index number in the radio frame includes: a system frame number, a slot number, and an OFDM symbol index number in the slot.

In some embodiments, the first pattern information includes at least one of resource element offset information, comb information and mapping pattern information.

In some embodiments, the resource element offset information includes at least one of a resource element offset and a resource element offset sequence;

and/or, the comb information includes at least one of a comb size and a comb index number.

In some embodiments, the first time interval information is a slot offset or time interval between a slot where the first control information is located and transmission or first transmission of the first SL-PRS.

In some embodiments, a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;

$T_2$ is a timing advance value corresponding to a timing advance group (TAG) of a service cell that receives the first control information;

M is a slot offset or time interval between the slot where the first control information is located and the transmission or first transmission of the first SL-PRS;

$T_3$ is a duration of the sidelink slot.

In some embodiments, the first priority information is information related to transmission priority of the first SL-PRS.

In some embodiments, the first location information includes at least one of a zone identifier of a transmitting user equipment of the first SL-PRS and a zone identifier of a receiving user equipment of the first SL-PRS.

In some embodiments, the first index number information includes at least one of index number information of a first SL-PRS resource, and index number information of a first SL-PRS resource set.

In some embodiments, the second index number information includes at least one of index number information of a transmitting user equipment of the first SL-PRS, and index number information of a receiving user equipment of the first SL-PRS.

In some embodiments, the first cast type information is used to indicate that the first SL-PRS is at least one type of unicast, multicast and broadcast.

In some embodiments, the first measurement reporting information is used to indicate that a measurement report related to the first SL-PRS is transmitted to a location management function (LMF) device, or to the second user equipment, or to a third user equipment other than the first user equipment and the second user equipment, or to the network device.

In some embodiments, the operations further include:

determining a target resource location based on the first control information; and
receiving the first SL-PRS at the target resource location.

In some embodiments, the operations further include:
determining sidelink positioning information for the first user equipment according to the first SL-PRS.

One embodiment of the present disclosure further provides an information transmission apparatus, including:

a first transmission unit used to transmit first control information to a first user equipment; wherein the first control information is used to schedule a first sidelink positioning reference signal (SL-PRS);
wherein the first device is a network device or a second user equipment, and the first control information is information related to a transmission resource of the first SL-PRS.

In some embodiments, the first control information includes at least one of the following:

first resource pool information;
first time-frequency resource information, wherein the first time-frequency resource information is information of time-frequency resources occupied by the first SL-PRS;
second time-frequency resource information, wherein the second time-frequency resource information is information of time-frequency resource occupied by a physical sidelink control channel (PSCCH);
first pattern information, wherein the first pattern information is pattern information related to the first SL-PRS;
first time interval information;
first priority information;

first location information;
first index number information, wherein the first index number information is index number information of the first SL-PRS;
second index number information, wherein the second index number information is index number information of the user equipment;
first cast type information; or,
first measurement reporting information.

In some embodiments, the first resource pool information includes type information of a first resource pool, and the type information is used to indicate that the first resource pool includes a dedicated resource pool and/or a shared resource pool;

and/or, the first resource pool information includes index number information of the first resource pool;
and/or, the first resource pool is at least one resource pool configured for the first SL-PRS.

In some embodiments, the dedicated resource pool is a resource pool dedicated to the first SL-PRS and channels related to an SL-PRS; and/or, the shared resource pool is a resource pool shared by the first SL-PRS and channels related to sidelink communication.

In some embodiments, the first control information is first downlink control information or first sidelink control information;
and/or, the first control information is carried by a first control channel or a second control channel; the first control channel is physical downlink control channel (PDCCH), and the second control channel is PSCCH.

In some embodiments, the first time-frequency resource information includes at least one of information of time domain resources occupied by the first SL-PRS and information of frequency domain resources occupied by the first SL-PRS.

In some embodiments, the information of time domain resources occupied by the first SL-PRS includes at least one of a starting orthogonal frequency division multiplex (OFDM) symbol index number, an ending OFDM symbol index number and the number of OFDM symbols occupied by the first SL-PRS;
and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In some embodiments, the second time-frequency resource information includes at least one of information of time domain resources occupied by the PSCCH and information of frequency domain resources occupied by the PSCCH.

In some embodiments, the PSCCH is associated with the first SL-PRS, and the PSCCH indicates information of time-frequency resources occupied by the first SL-PRS.

In some embodiments, the information of the time domain resources occupied by the PSCCH includes at least one of a starting OFDM symbol index number, an ending OFDM symbol index number and the number of OFDM symbols occupied by the PSCCH;
and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

In some embodiments, the OFDM symbol index number includes at least one of an OFDM symbol index number within a slot, an OFDM symbol index number within a subframe, and an OFDM symbol index number within a radio frame.

In some embodiments, the OFDM symbol index number in the radio frame includes: a system frame number, a slot number, and an OFDM symbol index number in the slot.

In some embodiments, the first pattern information includes at least one of resource element offset information, comb information and mapping pattern information.

In some embodiments, the resource element offset information includes at least one of a resource element offset and a resource element offset sequence;
and/or, the comb information includes at least one of a comb size and a comb index number.

In some embodiments, the first time interval information is a slot offset or time interval between a slot where the first control information is located and transmission or first transmission of the first SL-PRS.

In some embodiments, a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;
$T_2$ is a timing advance value corresponding to a timing advance group (TAG) of a service cell that receives the first control information;

M is a slot offset or time interval between the slot where the first control information is located and the transmission or first transmission of the first SL-PRS;

$T_3$ is a duration of the sidelink slot.

In some embodiments, the first priority information is information related to transmission priority of the first SL-PRS.

In some embodiments, the first location information includes at least one of a zone identifier of a transmitting user equipment of the first SL-PRS and a zone identifier of a receiving user equipment of the first SL-PRS.

In some embodiments, the first index number information includes at least one of index number information of a first SL-PRS resource, and index number information of a first SL-PRS resource set.

In some embodiments, the second index number information includes at least one of index number information of a transmitting user equipment of the first SL-PRS, and index number information of a receiving user equipment of the first SL-PRS.

In some embodiments, the first cast type information is used to indicate that the first SL-PRS is at least one type of unicast, multicast and broadcast.

In some embodiments, the first measurement reporting information is used to indicate that a measurement report related to the first SL-PRS is transmitted to a location management function (LMF) device, or to the second user equipment, or to a third user equipment other than the first user equipment and the second user equipment, or to the network device.

In some embodiments, the apparatus further includes:

a first determination unit used to determine a target resource location based on the first control information; and
a second transmission unit used to transmit the first SL-PRS at the target resource location.

In some embodiments, the apparatus further includes:

a second determination unit used to determine sidelink positioning information for the first user equipment according to the first SL-PRS.

One embodiment of the present disclosure further provides an information transmission apparatus, including:

a first receiving unit used to receive first control information transmitted by a first device; wherein the first control information is used to schedule a first SL-PRS;
wherein the first device is a network device or a second user equipment, and the first control information is information related to a transmission resource of the first SL-PRS.

In some embodiments, the first control information includes at least one of the following:

first resource pool information;
first time-frequency resource information, wherein the first time-frequency resource information is information of time-frequency resources occupied by the first SL-PRS;
second time-frequency resource information, wherein the second time-frequency resource information is information of time-frequency resource occupied by a physical sidelink control channel (PSCCH);
first pattern information, wherein the first pattern information is pattern information related to the first SL-PRS;
first time interval information;
first priority information;
first location information;
first index number information, wherein the first index number information is index number information of the first SL-PRS;
second index number information, wherein the second index number information is index number information of the user equipment;
first cast type information; or,
first measurement reporting information.

In some embodiments, the first resource pool information includes type information of a first resource pool, and the type information is used to indicate that the first resource pool includes a dedicated resource pool and/or a shared resource pool;

and/or, the first resource pool information includes index number information of the first resource pool;
and/or, the first resource pool is at least one resource pool configured for the first SL-PRS.

In some embodiments, the dedicated resource pool is a resource pool dedicated to the first SL-PRS and channels related to an SL-PRS; and/or, the shared resource pool is a resource pool shared by the first SL-PRS and channels related to sidelink communication.

In some embodiments, the first control information is first downlink control information or first sidelink control information;

and/or, the first control information is carried by a first control channel or a second control channel; the first control channel is physical downlink control channel (PDCCH), and the second control channel is PSCCH.

In some embodiments, the first time-frequency resource information includes at least one of information of time domain resources occupied by the first SL-PRS and information of frequency domain resources occupied by the first SL-PRS.

In some embodiments, the information of time domain resources occupied by the first SL-PRS includes at least one of a starting orthogonal frequency division multiplex (OFDM) symbol index number, an ending OFDM symbol index number and the number of OFDM symbols occupied by the first SL-PRS;

and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In some embodiments, the second time-frequency resource information includes at least one of information of time domain resources occupied by the PSCCH and information of frequency domain resources occupied by the PSCCH.

In some embodiments, the PSCCH is associated with the first SL-PRS, and the PSCCH indicates information of time-frequency resources occupied by the first SL-PRS.

In some embodiments, the information of the time domain resources occupied by the PSCCH includes at least one of a starting OFDM symbol index number, an ending OFDM symbol index number and the number of OFDM symbols occupied by the PSCCH;

and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

In some embodiments, the OFDM symbol index number includes at least one of an OFDM symbol index number within a slot, an OFDM symbol index number within a subframe, and an OFDM symbol index number within a radio frame.

In some embodiments, the OFDM symbol index number in the radio frame includes: a system frame number, a slot number, and an OFDM symbol index number in the slot.

In some embodiments, the first pattern information includes at least one of resource element offset information, comb information and mapping pattern information.

In some embodiments, the resource element offset information includes at least one of a resource element offset and a resource element offset sequence;

and/or, the comb information includes at least one of a comb size and a comb index number.

In some embodiments, the first time interval information is a slot offset or time interval between a slot where the first control information is located and transmission or first transmission of the first SL-PRS.

In some embodiments, a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;

$T_2$ is a timing advance value corresponding to a timing advance group (TAG) of a service cell that receives the first control information;

M is a slot offset or time interval between the slot where the first control information is located and the transmission or first transmission of the first SL-PRS;

$T_3$ is a duration of the sidelink slot.

In some embodiments, the first priority information is information related to transmission priority of the first SL-PRS.

In some embodiments, the first location information includes at least one of a zone identifier of a transmitting user equipment of the first SL-PRS and a zone identifier of a receiving user equipment of the first SL-PRS.

In some embodiments, the first index number information includes at least one of index number information of a first SL-PRS resource, and index number information of a first SL-PRS resource set.

In some embodiments, the second index number information includes at least one of index number information of a transmitting user equipment of the first SL-PRS, and index number information of a receiving user equipment of the first SL-PRS.

In some embodiments, the first cast type information is used to indicate that the first SL-PRS is at least one type of unicast, multicast and broadcast.

In some embodiments, the first measurement reporting information is used to indicate that a measurement report related to the first SL-PRS is transmitted to a location management function (LMF) device, or to the second user equipment, or to a third user equipment other than the first user equipment and the second user equipment, or to the network device.

In some embodiments, the apparatus further includes:

a third determination unit used to determine a target resource location based on the first control information; and
a second receiving unit used to receive the first SL-PRS at the target resource location.

In some embodiments, the apparatus further includes:
a fourth determination unit used to determine sidelink positioning information for the first user equipment according to the first SL-PRS.

One embodiment of the present disclosure further provides a non-transitory readable storage medium, including a computer program stored thereon; wherein the computer program is used to cause a processor to execute the information transmission method on the first device side or the first user equipment side.

The beneficial effects of the above technical solution of the present disclosure are as follows.

In the above solution, according to the information transmission method provided in the embodiment of the present disclosure, the first control information is transmitted to the first user equipment, where the first control information is used to schedule a first sidelink positioning reference signal (SL-PRS), the first device is a network device or a second user equipment, and the first control information is information related to a transmission resource of the first SL-PRS; this can support the first user equipment to obtain the information related to the transmission resource of the first SL-PRS, and then the first user equipment completes reception and decoding of the first SL-PRS according to the information related to the transmission resource of the first SL-PRS, thereby supporting the network device or user equipment to complete the sidelink positioning according to the first SL-PRS, which well solves the problem in the related art that the user equipment cannot determine the various resource information of the to-be-received SL-PRS transmission.

## BRIEF DESCRIPTION OF THE DRAWINGS

FIG. 1 is a schematic diagram of a wireless communication system architecture according to an embodiment of the present disclosure;
FIG. 2 is a schematic diagram of positioning by using a sidelink positioning reference signal (SL-PRS) according to an embodiment of the present disclosure;
FIG. 3 is a first flow chart of an information transmission method according to an embodiment of the present disclosure;
FIG. 4 is a second flow chart of an information transmission method according to an embodiment of the present disclosure;
FIG. 5 is a schematic diagram showing information of a first resource pool according to an embodiment of the present disclosure;
FIG. 6 is a schematic diagram showing information of time domain resources of a first SL-PRS according to an embodiment of the present disclosure;
FIG. 7 is a schematic diagram showing information of frequency domain resources of a first SL-PRS according to an embodiment of the present disclosure;
FIG. 8 is an overall schematic diagram of a first SL-PRS according to an embodiment of the present disclosure;
FIG. 9 is a schematic diagram of first pattern information of a first SL-PRS according to an embodiment of the present disclosure;
FIG. 10 is a schematic diagram of first time interval information according to an embodiment of the present disclosure;
FIG. 11 is a schematic diagram of first position information according to an embodiment of the present disclosure;
FIG. 12 is a first schematic diagram of an information transmission device according to an embodiment of the present disclosure;
FIG. 13 is a second schematic diagram of an information transmission device according to an embodiment of the present disclosure;
FIG. 14 is a third schematic diagram of an information transmission device according to an embodiment of the present disclosure;
FIG. 15 is a first schematic diagram of an information transmission apparatus according to an embodiment of the present disclosure; and
FIG. 16 is a second schematic diagram of an information transmission apparatus according to an embodiment of the present disclosure.

**DETAILED DESCRIPTION**

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

It is to be noted that the technical solution of the embodiment of the present disclosure may be applied to various systems, especially a 5G system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, or 5th-Generation (5G) New Radio (NR) system. Each of these systems includes a terminal device and a network device. Each system further includes a core network part, e.g., an Evolved Packet System (EPS) or 5G system (5GS/5GC).

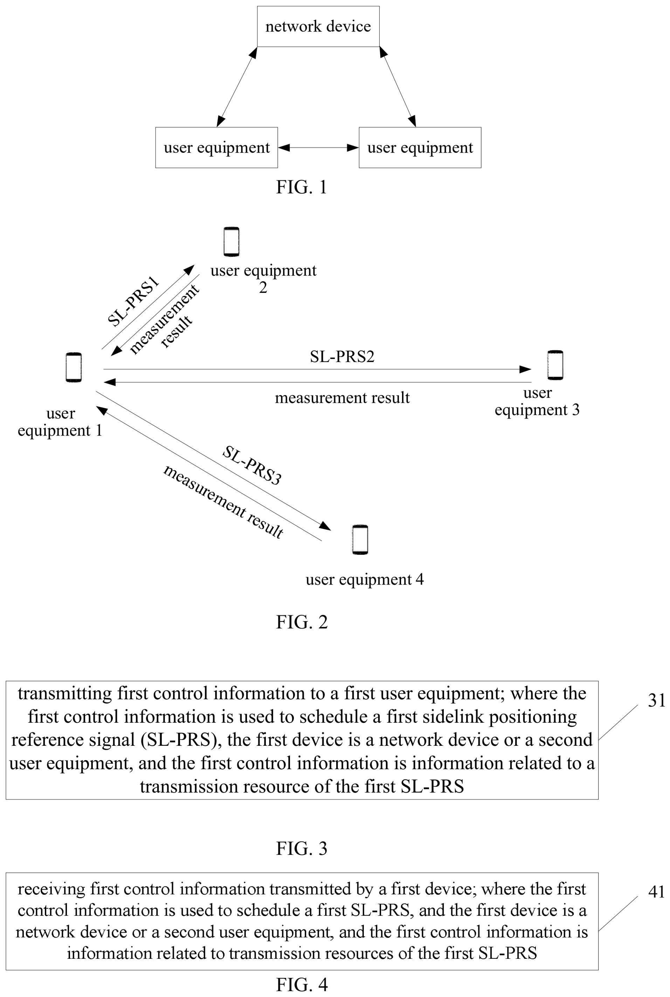

FIG. 1 shows a schematic diagram of an applicable wireless communication system architecture according to an embodiment of the present disclosure. The wireless communication system includes a terminal device (also referred as a user equipment), and a network device.

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

The following first introduces contents involved in the solution provided in the embodiment of the present disclosure.

As shown in FIG. 2, it is a schematic diagram showing a process that a user equipment (UE) 1 transmits sidelink positioning reference signals to user equipment 2-4 to achieve its own positioning. The user equipment 1 uses time-frequency resources to transmit SL-PRS to the user equipment 2 to 4, respectively (such as transmitting SL-PRS1 to UE2, transmitting SL-PRS2 to UE3, and transmitting SL-PRS3 to UE4 in the figure). After receiving the SL-PRS, the user equipment 2 to user equipment 4 transmit measurement results to the UE1 to assist the UE1 in completing the positioning solution.

Specifically, before receiving the SL-PRS, the user equipment needs to first determine various resource information used by to-be-received SL-PRS transmission, including resource pool information, time-frequency resource information and pattern information. However, there is currently no relevant technical solution for how to transmit indication information to the user equipment so that the user equipment can obtain this resource information. Thus, the user equipment cannot determine the various resource information of the to-be-received SL-PRS transmission, and then cannot complete reception and decoding of the SL-PRS, and thus cannot complete the sidelink positioning according to the SL-PRS.

In view of this, the embodiments of the present disclosure provide an information transmission method, device and apparatus, which can solve the problem in the related art that the user equipment cannot determine the various resource information of the to-be-received SL-PRS transmission. The method, device and apparatus are based on the same application concept. Since the principles of solving the problems by the method, device and apparatus are similar, the implementation of the method, device and apparatus can refer to each other, and the repeated parts will not be repeated.

An information transmission method provided in the embodiment of the present disclosure is applied to a first device, as shown in FIG. 3, and includes:

Step 31: transmitting first control information to a first user equipment; where the first control information is used to schedule a first sidelink positioning reference signal (SL-PRS), the first device is a network device or a second user equipment, and the first control information is information related to a transmission resource of the first SL-PRS.

The network device may be implemented as a base station, which is not limited thereto.

In the information transmission method provided in the embodiment of the present disclosure, the first control information is transmitted to the first user equipment, where the first control information is used to schedule a first sidelink positioning reference signal (SL-PRS), the first device is a network device or a second user equipment, and the first control information is information related to a transmission resource of the first SL-PRS; this can support the first user equipment to obtain the information related to the transmission resource of the first SL-PRS, and then the first user equipment completes reception and decoding of the first SL-PRS according to the information related to the transmission resource of the first SL-PRS, thereby supporting the network device or user equipment to complete the sidelink positioning according to the first SL-PRS, which well solves the problem in the related art that the user equipment cannot determine the various resource information of the to-be-received SL-PRS transmission.

In the embodiment of the present disclosure, the first control information includes at least one of the following: first resource pool information; first time-frequency resource information, where the first time-frequency resource information is information of time-frequency resources occupied by the first SL-PRS; second time-frequency resource information, where the second time-frequency resource information is information of time-frequency resources occupied by the physical sidelink control channel (PSCCH); first pattern information, where the first pattern information is pattern information related to the first SL-PRS; first time interval information; first priority information; first location information; first index number information, where the first index number information is index number information of the first SL-PRS; second index number information, where the second index number information is index number information of the user equipment; first cast type information; first measurement reporting information.

In this way, the specific first control information can be clarified.

The first resource pool information includes type information of a first resource pool, where the type information is used to indicate that the first resource pool includes a dedicated resource pool and/or a shared resource pool; and/or, the first resource pool information includes index number information of the first resource pool; and/or, the first resource pool is at least one resource pool configured for the first SL-PRS.

In this way, the specific first resource pool information can be accurately obtained.

In one embodiment of the present disclosure, the dedicated resource pool is a resource pool dedicated to the first SL-PRS and channels related to the SL-PRS; and/or, the shared resource pool is a resource pool shared by the first SL-PRS and channels related to sidelink communication.

This clarifies the meaning of dedicated resource pools and shared resource pools.

The first control information is first downlink control information or first sidelink control information; and/or, the first control information is carried by a first control channel or a second control channel. The first control channel is physical downlink control channel (PDCCH), and the second control channel is PSCCH.

In this way, the first control information can be implemented in various ways.

In the embodiment of the present disclosure, the first time-frequency resource information includes at least one of information of time domain resources occupied by the first SL-PRS and information of frequency domain resources occupied by the first SL-PRS.

In this way, the information related to the resources occupied by the first SL-PRS can be accurately obtained.

The information of time domain resources occupied by the first SL-PRS includes at least one of a starting orthogonal frequency division multiplex (OFDM) symbol index number, an ending OFDM symbol index number and the number of OFDM symbols occupied by the first SL-PRS; and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In this way, the information related to the resources occupied by the first SL-PRS can be specified.

In one embodiment of the present disclosure, the second time-frequency resource information includes at least one of information of time domain resources occupied by the PSCCH and information of frequency domain resources occupied by the PSCCH.

In this way, the information related to the resources occupied by the PSCCH can be accurately obtained.

The PSCCH is associated with the first SL-PRS, and the PSCCH indicates information of time-frequency resources occupied by the first SL-PRS.

In this way, information related to the resources occupied by the first SL-PRS can be obtained from the second time-frequency resource information.

In one embodiment of the present disclosure, the information of the time domain resources occupied by the PSCCH includes at least one of a starting OFDM symbol index number, an ending OFDM symbol index number and the number of OFDM symbols occupied by the PSCCH; and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

In this way, the information related to the resources occupied by the PSCCH can be specified.

The OFDM symbol index number includes at least one of an OFDM symbol index number within a slot, an OFDM symbol index number within a subframe, and an OFDM symbol index number within a radio frame.

In this way, various forms of OFDM symbol index numbers can be implemented.

In one embodiment of the present disclosure, the OFDM symbol index number in the radio frame includes: a system frame number, a slot number, and an OFDM symbol index number in the slot.

In this way, the OFDM symbol index number in the radio frame can be accurately obtained.

The first pattern information includes at least one of resource element offset information, comb information, and mapping pattern information.

In this way, various forms of first pattern information can be realized.

In one embodiment of the present disclosure, the resource element offset information includes at least one of a resource element offset and a resource element offset sequence; and/or, the comb information includes at least one of a comb size and a comb index number.

In this way, the resource element offset information and/or comb information can be specifically obtained.

The first time interval information is a slot offset or time interval between a slot where the first control information is located and transmission or first transmission of the first SL-PRS.

In this way, the first time interval information can be specified.

In one embodiment of the present disclosure, the slot for transmission or first transmission of the first SL-PRS is a first sidelink slot whose starting time of a corresponding resource pool is no earlier than $T_1 - T_2/2 + M \times T_3$; where $T_1$ is a starting time of downlink slot carrying the corresponding first control information; $T_2$ is a timing advance value corresponding to a timing advance group (TAG) of a service cell that receives the first control information; M is a slot offset or time interval between the slot where the first control information is located and the transmission or first transmission of the first SL-PRS; $T_3$ is a duration of the sidelink slot.

In this way, the slot for transmission or first transmission of the first SL-PRS can be accurately determined.

The first priority information is information related to transmission priority of the first SL-PRS.

This can support resource avoidance or preemption, thereby allowing high-priority services to be transmitted more reliably.

In one embodiment of the present disclosure, the first location information includes at least one of a zone identifier of a transmitting user equipment of the first SL-PRS and a zone identifier of a receiving user equipment of the first SL-PRS.

This can support assistance for more accurate positioning.

The first index number information includes at least one of index number information of a first SL-PRS resource, and index number information of a first SL-PRS resource set.

This can help specify the index number information of the first SL-PRS.

In one embodiment of the present disclosure, the second index number information includes at least one of index number information of a transmitting user equipment of the first SL-PRS, and index number information of a receiving user equipment of the first SL-PRS.

This can help specify the user equipment's index number information.

The first cast type information is used to indicate that the first SL-PRS is at least one type of unicast, multicast and broadcast.

This can help specify the cast type of the first SL-PRS.

In one embodiment of the present disclosure, the first measurement reporting information is used to indicate that a measurement report related to the first SL-PRS is transmitted to a location management function (LMF) device, or to the second user equipment, or to a third user equipment other than the first user equipment and the second user equipment, or to the network device.

This can help specify the recipient of the measurement report related to the first SL-PRS.

Further, the information transmission method further includes: determining a target resource location based on the first control information; and transmitting the first SL-PRS at the target resource location.

In this way, the first SL-PRS can be accurately transmitted.

In one embodiment of the present disclosure, the information transmission method further includes: determining sidelink positioning information for the first user equipment according to the first SL-PRS.

In this way, the sidelink positioning information for the first user equipment can be accurately obtained.

One embodiment of the present disclosure further provides an information transmission method, which is applied to a first user equipment, as shown in FIG. 4, and includes:

Step 41: receiving first control information transmitted by a first device; where the first control information is used to schedule a first SL-PRS, and the first device is a network device or a second user equipment, and the first control information is information related to transmission resources of the first SL-PRS.

The network device may be implemented as a base station, which is not limited thereto.

In the information transmission method provided in the embodiment of the present disclosure, first control information transmitted by a first device is received, where the first control information is used to schedule a first SL-PRS, and the first device is a network device or a second user equipment, and the first control information is information related to transmission resources of the first SL-PRS; this can support the first user equipment to obtain the information related to the transmission resource of the first SL-PRS, and then the first user equipment completes reception and decoding of the first SL-PRS according to the information related to the transmission resource of the first SL-PRS, thereby supporting the network device or user equipment to complete the sidelink positioning according to the first SL-PRS, which well solves the problem in the related art that the user equipment cannot determine the various resource information of the to-be-received SL-PRS transmission.

In one embodiment of the present disclosure, the first control information includes at least one of the following: first resource pool information; first time-frequency resource information, where the first time-frequency resource information is information of time-frequency resources occupied by the first SL-PRS; second time-frequency resource information, where the second time-frequency resource information is information of time-frequency resources occupied by the physical sidelink control channel (PSCCH); first pattern information, where the first pattern information is pattern information related to the first SL-PRS; first time interval information; first priority information; first location information; first index number information, where the first index number information is index number information of the first SL-PRS; second index number information, where the second index number information is index number information of the user equipment; first cast type information; first measurement reporting information.

In this way, the specific first control information can be clarified.

The first resource pool information includes type information of a first resource pool, where the type information is used to indicate that the first resource pool includes a dedicated resource pool and/or a shared resource pool; and/or, the first resource pool information includes index number information of the first resource pool; and/or, the first resource pool is at least one resource pool configured for the first SL-PRS.

In this way, the specific first resource pool information can be accurately obtained.

In one embodiment of the present disclosure, the dedicated resource pool is a resource pool dedicated to the first SL-PRS and channels related to the SL-PRS; and/or, the shared resource pool is a resource pool shared by the first SL-PRS and channels related to sidelink communication.

This clarifies the meaning of dedicated resource pools and shared resource pools.

The first control information is first downlink control information or first sidelink control information; and/or, the first control information is carried by a first control channel or a second control channel. The first control channel is physical downlink control channel (PDCCH), and the second control channel is PSCCH.

In this way, the first control information can be implemented in various ways.

In the embodiment of the present disclosure, the first time-frequency resource information includes at least one of information of time domain resources occupied by the first SL-PRS and information of frequency domain resources occupied by the first SL-PRS.

In this way, the information related to the resources occupied by the first SL-PRS can be accurately obtained.

The information of time domain resources occupied by the first SL-PRS includes at least one of a starting orthogonal frequency division multiplex (OFDM) symbol index number, an ending OFDM symbol index number and the number of OFDM symbols occupied by the first SL-PRS; and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In this way, the information related to the resources occupied by the first SL-PRS can be specified.

In one embodiment of the present disclosure, the second time-frequency resource information includes at least one of information of time domain resources occupied by the PSCCH and information of frequency domain resources occupied by the PSCCH.

In this way, the information related to the resources occupied by the PSCCH can be accurately obtained.

The PSCCH is associated with the first SL-PRS, and the PSCCH indicates information of time-frequency resources occupied by the first SL-PRS.

In this way, information related to the resources occupied by the first SL-PRS can be obtained from the second time-frequency resource information.

In one embodiment of the present disclosure, the information of the time domain resources occupied by the PSCCH includes at least one of a starting OFDM symbol index number, an ending OFDM symbol index number and the number of OFDM symbols occupied by the PSCCH; and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

In this way, the information related to the resources occupied by the PSCCH can be specified.

The OFDM symbol index number includes at least one of an OFDM symbol index number within a slot, an OFDM symbol index number within a subframe, and an OFDM symbol index number within a radio frame.

In this way, various forms of OFDM symbol index numbers can be implemented.

In one embodiment of the present disclosure, the OFDM symbol index number in the radio frame includes: a system frame number, a slot number, and an OFDM symbol index number in the slot.

In this way, the OFDM symbol index number in the radio frame can be accurately obtained.

The first pattern information includes at least one of resource element offset information, comb information and mapping pattern information.

In this way, various forms of first pattern information can be realized.

In one embodiment of the present disclosure, the resource element offset information includes at least one of a resource element offset and a resource element offset sequence; and/or, the comb information includes at least one of a comb size and a comb index number.

In this way, the resource element offset information and/or comb information can be specifically obtained.

The first time interval information is a slot offset or time interval between a slot where the first control information is located and transmission or first transmission of the first SL-PRS.

In this way, the first time interval information can be specified.

In one embodiment of the present disclosure, the slot for transmission or first transmission of the first SL-PRS is a first sidelink slot whose starting time of a corresponding resource pool is no earlier than $T_1 - T_2/2 + M \times T_3$; where $T_1$ is a starting time of downlink slot carrying the corresponding first control information; $T_2$ is a timing advance value corresponding to a timing advance group (TAG) of a service cell that receives the first control information; $M$ is a slot offset or time interval between the slot where the first control information is located and the transmission or first transmission of the first SL-PRS; $T_3$ is a duration of the sidelink slot.

In this way, the slot for transmission or first transmission of the first SL-PRS can be accurately determined.

The first priority information is information related to transmission priority of the first SL-PRS.

This can support resource avoidance or preemption, thereby allowing high-priority services to be transmitted more reliably.

In one embodiment of the present disclosure, the first location information includes at least one of a zone identifier of a transmitting user equipment of the first SL-PRS and a zone identifier of a receiving user equipment of the first SL-PRS.

This can support assistance for more accurate positioning.

The first index number information includes at least one of index number information of a first SL-PRS resource, and index number information of a first SL-PRS resource set.

This can help specify the index number information of the first SL-PRS.

In one embodiment of the present disclosure, the second index number information includes at least one of index number information of a transmitting user equipment of the first SL-PRS, and index number information of a receiving user equipment of the first SL-PRS.

This can help specify the user equipment's index number information.

The first cast type information is used to indicate that the first SL-PRS is at least one type of unicast, multicast and broadcast.

This can help specify the cast type of the first SL-PRS.

In one embodiment of the present disclosure, the first measurement reporting information is used to indicate that a measurement report related to the first SL-PRS is transmitted to a location management function (LMF) device, or to the second user equipment, or to a third user equipment other than the first user equipment and the second user equipment, or to the network device.

This can help specify the recipient of the measurement report related to the first SL-PRS.

Further, the information transmission method further includes: determining a target resource location based on the first control information; and receiving the first SL-PRS at the target resource location.

In this way, the first SL-PRS can be accurately transmitted.

In one embodiment of the present disclosure, the information transmission method further includes: determining sidelink positioning information for the first user equipment according to the first SL-PRS.

In this way, the sidelink positioning information for the first user equipment can be accurately obtained.

The information transmission method provided in the embodiment of the present disclosure is described hereinafter with examples in which the network device is exemplified by a base station.

In view of the above technical problems, one embodiment of the present disclosure provides an information transmission method, which can be specifically implemented as a method for indicating SL-PRS resource information. With this method, a base station or other user equipment transmits a first control information for scheduling SL-PRS (corresponding to the above first SL-PRS) to a target user equipment (corresponding to the above first user equipment) to determine the resource pool information, time-frequency resource information, pattern information, time interval information, index number information and other information used for the SL-PRS transmission, so that the user equipment can complete reception and decoding of the SL-PRS according to the SL-PRS resource information, and complete the sidelink positioning according to SL-PRS. It mainly involves:

the first device transmits first control information for scheduling the first SL-PRS to the first user equipment, where the first control information includes at least one of first resource pool information, first time-frequency resource information, second time-frequency resource information, first pattern information, first time interval information, first priority information, first location information, first index number information, second index number information, first cast type information, and first measurement reporting information. The first device may be a first base station (corresponding to the above network device) or a second user equipment.

The following is a detailed description of each piece of the above information.

1. first resource pool information

(1) The first resource pool is at least one resource pool configured for transmission of the first SL-PRS.

(2) The first resource pool information includes type information of the first resource pool, and the type information indicates that the first resource pool includes only a dedicated resource pool, or includes only a shared resource pool, or includes information of both a dedicated resource pool and a shared resource pool. The dedicated resource pool is a resource pool dedicated to the first SL-PRS and channels related to the SL-PRS; and the shared resource pool is a resource pool shared by the first SL-PRS and channels related to sidelink communication.

(3) The first resource pool information includes index number information of the first resource pool.

(4) The first control information is first downlink control information or first sidelink control information.

(5) The first control information is carried by a first control channel or a second control channel. The first control channel is physical downlink control channel (PDCCH), and the second control channel is physical sidelink control channel (PSCCH).

2. First time-frequency resource information:

(6) The first time-frequency resource information includes at least one of information of time domain resource occupied by the first SL-PRS and information of frequency domain resource occupied by the first SL-PRS.

(7) The information of time domain resource occupied by the first SL-PRS includes at least one of the following information: a starting orthogonal frequency division multiplexin (OFDM) symbol index number, an ending OFDM symbol index number, the number of OFDM symbols, etc. occupied by the first SL-PRS.

a) The OFDM symbol index number includes at least one of an OFDM symbol index number within a slot, an OFDM symbol index number within a subframe, an OFDM symbol index number within a radio frame.
b) The OFDM symbol index number within a radio frame includes a system frame number, a slot number, and an OFDM symbol index number within the slot.

(8) The information of frequency domain resource occupied by the first SL-PRS includes at least one of the following information: a starting physical resource block (PRB) index number, an ending PRB index number, the number of PRBs occupied by the first SL-PRS, a starting subchannel index number, an ending subchannel index number, the number of subchannels occupied by the first SL-PRS.

3. Second time-frequency resource information:

(9) The second time-frequency resource information includes at least one of time domain resource information occupied by the second control channel (i.e., PSCCH) and frequency domain resource information occupied by the second control channel.
(10) The second control channel is associated with the first SL-PRS; the second control channel indicates information of time-frequency resources of (occupied by) the first SL-PRS.
(11) The time domain resource information occupied by the second control channel includes at least one of the following information: a starting OFDM symbol index number, an ending OFDM symbol index number, and the number of OFDM symbols occupied by the second control channel.

a) The OFDM symbol index number includes at least one of an OFDM symbol index number within a slot, an OFDM symbol index number within a subframe, an OFDM symbol index number within a radio frame, etc.
b) The OFDM symbol index number within a radio frame includes: a system frame number, a slot number, and an OFDM symbol index number within the slot.

(12) The frequency domain resource information occupied by the second control channel includes at least one of the following information: a starting PRB index number, an ending PRB index number, the number of PRBs occupied by the second control channel, a starting subchannel index number, an ending subchannel index number, the number of subchannels occupied by the second control channel, etc.

4. First pattern information:

(13) The first pattern information includes at least one of resource element offset information, comb information, mapping pattern information.
(14) the resource element (RE) offset information includes at least one of a resource element offset, a resource element offset sequence, and the like.
(15) The comb information includes at least one of the following information: comb size, comb index number, etc.

5. First time interval information:

(16) The first time interval information refers to a slot offset or time interval between a slot where the first control information is located and transmission or first transmission of the first SL-PRS scheduled by the first control information.
(17) The slot for transmission or the first transmission of the first SL-PRS scheduled by the first control information is a first sidelink slot of the corresponding resource pool (i.e., the resource pool where the first SL-PRS is located) whose starting time is not earlier than $T_1 - \dfrac{T_2}{2} + M \times T_3$ , where:

$T_1$ is a starting time of a downlink slot carrying the corresponding first control information;
$T_2$ is a timing advance value corresponding to a timing advance group (TAG) of a serving cell (belonging to a base station covering the first user equipment, such as the first base station) receiving the first control information;
M is a slot offset or time interval between the slot where the first control information is located and the transmission or first transmission of the first SL-PRS scheduled by the first control information, which can be understood that M is equal to the value corresponding to the first time interval information;

$T_3$ is a duration of the sidelink slot and can be a fixed value.

6. First priority information:

(18) The first priority information includes information related to the transmission priority of the first SL-PRS.

7. First location information

(19) The first location information includes a zone identifier (ID) of the transmitting user equipment of the first SL-PRS (i.e., an identifier of a zone where the transmitting user equipment is located).

(20) The first location information includes the zone ID of the receiving user equipment of the first SL-PRS.

8. First index number information:

(21) The first index number information includes index number information of a first SL-PRS resource.

(22) The first index number information includes index number information of a first SL-PRS resource set.

9. Second index number information:

(23) The second index number information includes index number information of a transmitting user equipment of the first SL-PRS.

(24) The second index number information includes index number information of a receiving user equipment of the first SL-PRS.

10. First cast type information:

(25) The first cast type information indicates whether the first SL-PRS is at least one of unicast, multicast or broadcast. It can be understood that the first cast type information indicates manner used to transmit the PRS, which is not limited thereto.

11. First measurement reporting information:

(26) The first measurement reporting information indicates whether the first SL-PRS related measurement report is transmitted to the LMF or to the transmitting UE (corresponding to the above second user equipment), or to a third-party UE, or to the first base station.

The solution provided in the embodiments of the present disclosure is further described with specific examples.

Example 1 (regarding the first resource pool information)

This exemplary solution involves that a first base station transmits first control information for scheduling a first SL-PRS to a first user equipment, where the first control information includes first resource pool information.

The specific meaning of the first resource pool information is as follows.

The first resource pool is at least one resource pool configured for transmission of the first SL-PRS.

The first resource pool information includes type information of the first resource pool, where the type information indicates that the first resource pool includes only a dedicated resource pool, or only a shared resource pool, or includes information of both a dedicated resource pool and a shared resource pool.

The first resource pool information includes index number information of the first resource pool.

The first control information is first downlink control information or first sidelink control information.

The first control information is carried by a first control channel or a second control channel. The first control channel is a PDCCH, and the second control channel is a PSCCH.

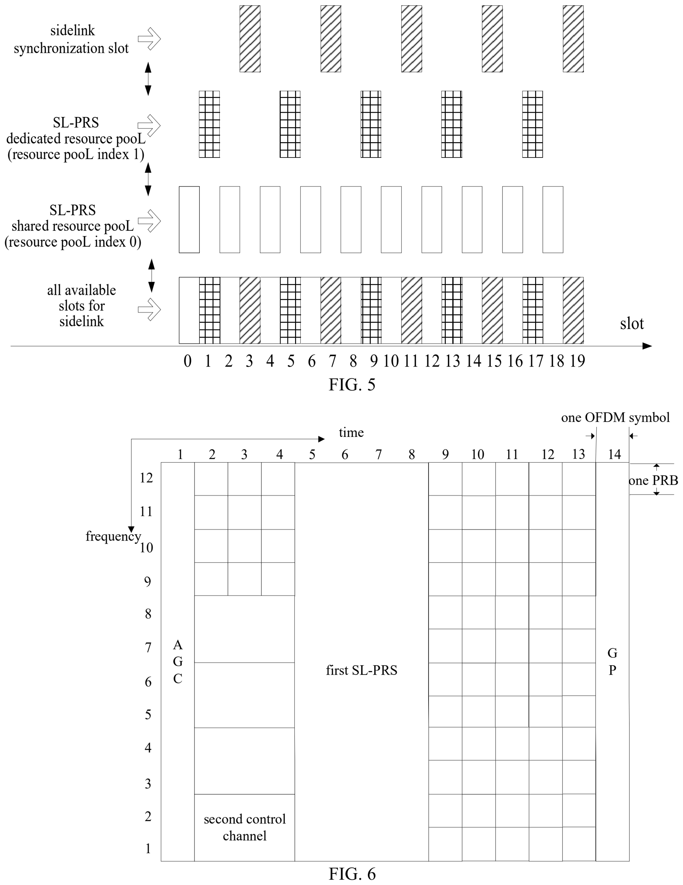

Based on the above, specifically, as shown in the fourth row of "available slots for sidelink" in FIG. 5, each long square represents a slot, and there are 20 slots in total. The slots filled with slashes represent a slot set (i.e., sidelink synchronization slot set {3, 7, 11, 15, 19}, which are the first row of slots in FIG. 5) used for transmission of sidelink-synchronization signal block (S-SSB). These slots filled with slashes can only be used to transmit S-SSB and cannot be used to transmit other signals or channels. In addition to the synchronization slots filled with slashes, there are also slots filled with squares. These slots filled with squares represent a slot set (i.e., a slot set of a dedicated resource pool for sidelink positioning {1, 5, 9, 13, 17}, which are the second row of slots in FIG. 5, and can only be used to transmit SL-PRS) of a dedicated resource pool for sidelink positioning. In addition to the synchronization slots filled with slashes lines and the dedicated slots filled with squares, the remaining slots of blank are a slot set (i.e., a slot set of a sidelink resource pool {0, 2, 4, 6, 8, 10, 12, 14, 16, 18}, which are the third row of slots in FIG. 5) of a sidelink shared resource pool, which can be used for sidelink data communication (transmission of PSSCH) and sidelink positioning (transmission of SL-PRS). Since the sidelink dedicated resource pool can only be used to transmit SL-PRS, and cannot transmit other sidelink communication channels or signals, transmitting SL-PRS in the dedicated resource pool can avoid collision between SL-PRS and sidelink communication channels or signals such as PSCCH, physical sidelink shared channel (PSSCH), physical sidelink feedback channel (PSFCH) and/or SL channel state indication (CSI) reference signal (CSI-RS). However, in a dedicated resource pool, a collision between two SL-PRSs may occur, i.e., two SL-PRSs are transmitted simultaneously in the slot. In a shared resource pool, a collision between a SL-PRS and a sidelink communication channel or signal such as PSCCH, PSSCH, PSFCH and/or SL CSI-RS may occur, and a collision between two SL-PRSs may also occur.

The first resource pool information includes the type information of the first resource pool. In FIG. 5, the first resource pool information includes information of the dedicated resource pool and the shared resource pool, that is, the first resource pool information includes index number information of the SL-PRS dedicated resource pool and index number information of the SL-PRS shared resource pool.

From the above, this example adopts this SL-PRS resource information indication method, which enables the user equipment to determine the resource pool information used for the SL-PRS transmission according to the first resource pool information, so that the user equipment can complete reception and decoding of the SL-PRS, thereby completing the sidelink positioning based on the SL-PRS.

Example 2 (regarding first time-frequency resource information-time domain)

This example solution involves that a first base station sends first control information for scheduling a first SL-PRS to a first user equipment, and the first control information includes first time-frequency resource information.

The specific first time-frequency resource information is as follows.

The first time-frequency resource information includes at least one of information of time domain resource occupied by the first SL-PRS and information of frequency domain resource occupied by the first SL-PRS.

The information of time domain resource occupied by the first SL-PRS includes at least one of a starting OFDM symbol index number, an ending OFDM symbol index number, the number of OFDM symbols occupied by the first SL-PRS.

The OFDM symbol index number includes at least one of an OFDM symbol index number within a slot, an OFDM symbol index number within a subframe, an OFDM symbol index number within a radio frame.

The OFDM symbol index number in the radio frame includes a system frame number, a slot number and an OFDM symbol index number in the slot.

Based on the above, specifically, as shown in FIG. 6, the index number of the starting OFDM symbol occupied by the first SL-PRS is #5, the index number of the ending OFDM symbol is #8, and the number of OFDM symbols is 4. The index number of this OFDM symbol refers to an OFDM index number in the slot. AGC in FIG. 6 represents automatic gain control, and GP represents guard period.

The time domain information may also be the OFDM symbol index number within a subframe. Since a subframe may include 1 slot (subcarrier spacing (SCS)=15KHz), 2 slots (SCS=30KHz), 4 slots (SCS=60KHz), 8 slots (SCS=120KHz), etc., if the time domain information is the OFDM symbol index number within the subframe, it is necessary to add a slot index number before the OFDM symbol index number within the slot. Assuming that the current slot of the SL-PRS is #3, then the index number of the starting OFDM symbol occupied by the first SL-PRS is: symbol #5 within slot #3, and the index number of the ending OFDM symbol is symbol #8 within slot #3.

The time domain information may also be the OFDM symbol index number in the radio frame. Since a radio frame includes 10 subframes, and a subframe may include 1 slot (SCS=15KHz), 2 slots (SCS=30KHz), 4 slots (SCS=60KHz), 8 slots (SCS=120KHz), etc., if the time domain information is the OFDM symbol index number in the radio frame, it is necessary to add a subframe index number before the OFDM symbol index number in the subframe. Assuming that the subframe where the SL-PRS is currently located is #6 and the slot where it is located is #3, then the index number of the starting OFDM symbol occupied by the first SL-PRS is: {subframe #6, slot #3, symbol #5}, and the index number of the ending OFDM symbol is {subframe #6, slot #3, symbol #8}.

From the above, this example adopts this SL-PRS resource information indication method, to enable the user equipment to determine the time domain resource location information used for the SL-PRS transmission according to the first time-frequency resource information, so that the user equipment can complete the reception and decoding of the SL-PRS, and complete the sidelink positioning based on the SL-PRS.

Example 3 (regarding the first time-frequency resource information-frequency domain)

This example solution involves that a first base station transmits first control information for scheduling a first SL-PRS to a first user equipment, and the first control information includes first time-frequency resource information.

The specific first time-frequency resource information is as follows.

The first time-frequency resource information includes at least one of information of time domain resources occupied by the first SL-PRS and information of frequency domain resource occupied by the first SL-PRS.

The information of frequency domain resources occupied by the first SL-PRS includes at least one of the following information: a starting PRB index number, an ending PRB index number, the number of PRBs occupied by the first SL-PRS, a starting subchannel index number, an ending subchannel index number, the number of subchannels occupied by the first SL-PRS, etc.

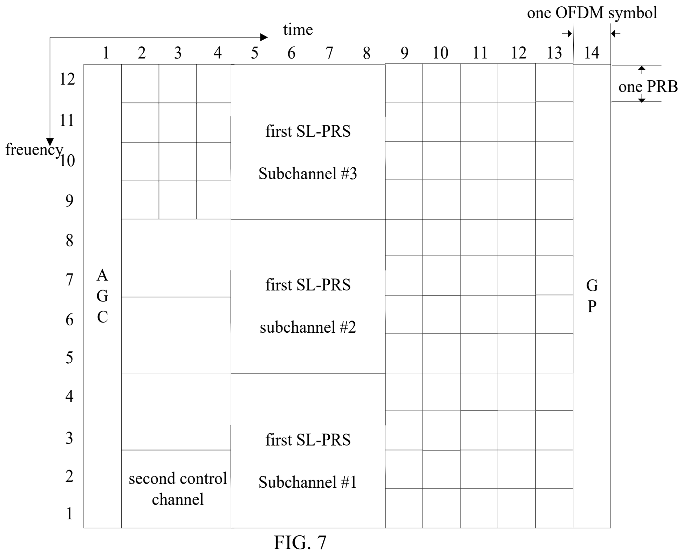

Based on the above, specifically, as shown in FIG. 7, a subchannel is a frequency domain unit for SL-PRS resource allocation, and a subchannel is composed of one or more continuous PRBs in the frequency domain. Each small square in FIG. 7 represents a PRB in the frequency domain and an OFDM symbol in the time domain. The transmission of the first SL-PRS uses 4 OFDM symbols (symbols #5 to #8) in the time domain, and uses three subchannels in the frequency domain, namely subchannels #1 to #3, each of which is composed of 4 PRBs. The information of frequency domain resources used by the transmission of the first SL-PRS refers to at least one of a starting position (PRB#1), an ending position (PRB#12), the number of PRBs, a starting PRB (PRB#1), an ending PRB (PRB#12), a lowest subchannel (subchannel#1), a highest subchannel (subchannel#3), a lowest PRB of a lowest subchannel (PRB#1), and a highest PRB (PRB#12) of a highest subchannel, of the frequency domain resources used by the transmission of first SL-PRS.

From the above, this example adopts this SL-PRS resource information indication method, which enables the user equipment to determine the frequency domain resource location information used for the SL-PRS transmission according to the first time-frequency resource information, so that the user equipment can complete the reception and decoding of the SL-PRS, and complete the sidelink positioning based on the SL-PRS.

Example 4 (regarding the first pattern information)

This example solution involves that the second user equipment transmits first control information for scheduling a first SL-PRS to the first user equipment, and the first control information includes first pattern information.

The specific first pattern information is as follows.

The first pattern information includes at least one of resource element offset information, comb information, mapping pattern information and the like.

The resource element offset (RE offset) information includes at least one of a resource element offset, a resource element offset sequence, and the like.

The comb information includes at least one of the following information: comb size, comb index number, etc.

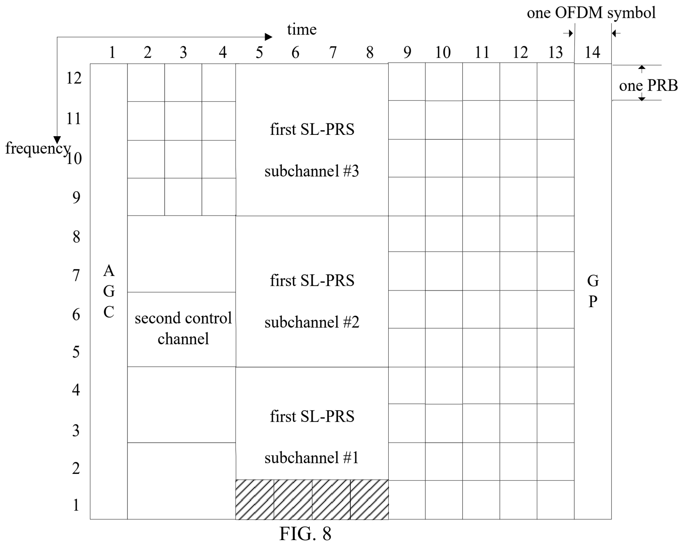

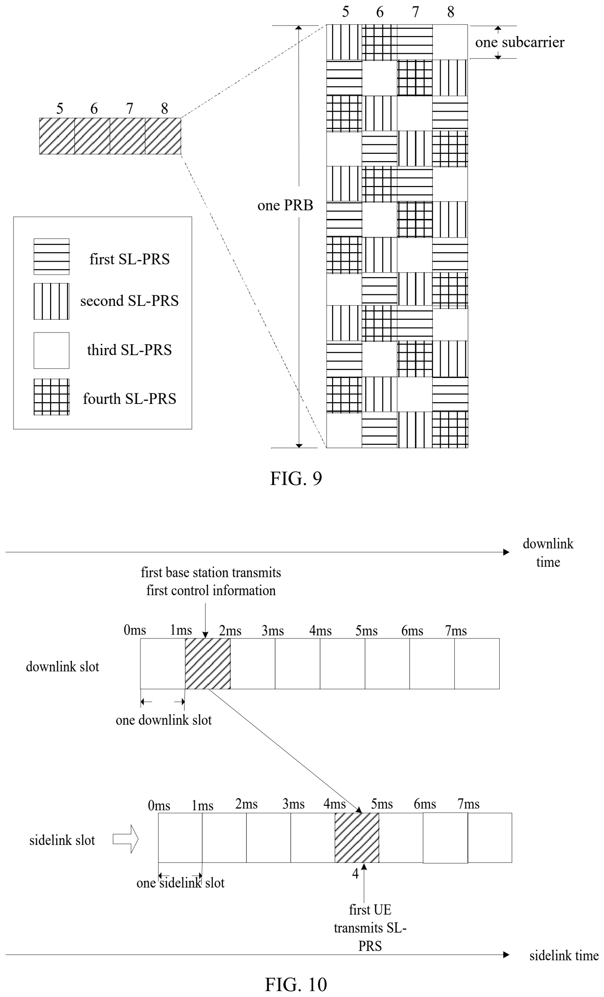

Based on the above, specifically, as shown in FIG. 8, a subchannel is the frequency domain unit of SL-PRS resource allocation, and a subchannel is composed of one or more continuous PRBs in the frequency domain. Each small square in FIG. 8 represents a PRB in the frequency domain and an OFDM symbol in the time domain. The transmission of the first SL-PRS uses 4 OFDM symbols (symbols #5 to #8) in the time domain and three subchannels in the frequency domain, namely subchannels #1 to #3, each of which is composed of 4 PRBs. If the 4 PRBs filled with oblique lines in the first SL-PRS subchannel #1 in FIG. 8 are enlarged to the subcarrier granularity, FIG. 9 can be obtained.

Each small square on the right side of FIG. 9 is a resource element, that is, it represents a subcarrier in the frequency domain and an OFDM symbol in the time domain. The resource elements represented by all the small squares with the same filling form a comb. Resource elements with different fillings carry different SL-PRS resources or resource sets, that is, the resource element filled with horizontal lines (comb index number 0) carries the first SL-PRS, the resource element filled with vertical lines (comb index number 1) carries the second SL-PRS, the resource element filled with blanks (comb index number 2) carries the third SL-PRS, and the resource element filled with squares (comb index number 3) carries the fourth SL-PRS. In other words, the first to fourth SL-PRSs occupy different subcarriers in the same PRB, which is a comb pattern. Since up to 4 different SL-PRSs can be multiplexed, the comb size of the comb pattern is 4.

Specifically, the resource element offset of the first SL-PRS on symbol #5 is 2, the resource element offset of the second SL-PRS on symbol #5 is 3, the resource element offset of the third SL-PRS on symbol #5 is 0. The resource element offset of the fourth SL-PRS on symbol #5 is 1.

The resource element offset sequence refers to resource element offset information of an SL-PRS on all the symbols it occupies. For example, the third SL-PRS occupies 4 symbols, and its resource element offset sequence is {0, 2, 1, 3}.

From the above, this example adopts this SL-PRS resource information indication method, which enables the user equipment to determine the comb resource position information used for the SL-PRS transmission according to the first pattern information, so that the user equipment can complete the reception and decoding of the SL-PRS, and complete the sidelink positioning based on the SL-PRS.

Example 5 (regarding the first time interval information):

This example solution involves that a first base station transmits first control information for scheduling a first SL-PRS to a first user equipment, and the first control information includes first time interval information.

The specific first time interval information is as follows.

The first time interval information refers to a slot offset or time interval between a slot where the first control information is located and transmission or first transmission of the first SL-PRS scheduled by the first control information (that is, a slot offset or time interval between a slot where the first control information is located and transmission of the first SL-PRS, or a slot offset or time interval between a slot where the first control information is located and the first transmission of the first SL-PRS).

The slot for transmission or the first transmission of the first SL-PRS scheduled by the first control information is a first sidelink slot of the corresponding resource pool whose starting time is not earlier than $T_1 - \frac{T_2}{2} + M \times T_3$, where:

$T_1$ is a starting time of a downlink slot carrying the corresponding first control information;

$T_2$ is a timing advance value corresponding to a timing advance group (TAG) of a serving cell receiving the first control information;

$M$ is a slot offset or time interval between the slot where the first control information is located and the transmission or first transmission of the first SL-PRS scheduled by the first control information;

$T_3$ is a duration of the sidelink slot.

Based on the above, specifically, as shown in FIG. 10, the first row of slots are downlink slots, each square represents a downlink slot, and the starting time of each downlink slot is shown in an upper left corner of the slot. The second row of slots are sidelink slots, each square represents a sidelink slot, and the starting time of each sidelink slot is shown in an upper left corner of the slot. Assuming that $T_1$ is 1ms, $T_2$ is 0.6ms, M is 3 slots, and $T_3$ is 1ms, then the first time interval information indicated by the first control information is 3 slots. The slot for transmission of the first SL-PRS should be not earlier than:

$$T_1 - \frac{T_2}{2} + M \times T_3 = 1 - \frac{0.6}{2} + 3 \times 1 = 3.7\text{ms}$$

Then, the starting time of the corresponding resource pool where the transmission of the SL-PRS is located is not earlier than the first sidelink slot of 3.7ms, that is, slot No. 4 starting from 4ms, so the first user equipment transmits SL-PRS in slot No. 4.

From the above, this example adopts this SL-PRS resource information indication method, which enables the user equipment to determine the time domain resource location information used for the SL-PRS transmission according to the first time interval information, so that the user equipment can complete the reception and decoding of the SL-PRS, and complete the sidelink positioning based on the SL-PRS.

Example 6 (regarding the first priority information and the first position information)

This example solution involves that the second user equipment transmits first control information for scheduling a first SL-PRS to the first user equipment, and the first control information includes first priority information and first location information.

The specific first priority information and first location information are as follows.

The first priority information includes information related to transmission priority of the first SL-PRS.

The first location information includes a zone ID of a transmitting user equipment of the first SL-PRS.

The first location information includes a zone ID of the receiving user equipment of the first SL-PRS.

Based on the above, specifically, the first priority information may be priority of the first SL-PRS that can be transmitted on the resource, the first user equipment can determine the next resource selection process according to the priority information of the first SL-PRS. Since the Internet of Vehicles system belongs to a self-organizing network and there is no centralized scheduling node, if each user equipment transmits SL-PRS, it is likely that the user equipment that needs to transmit SL-PRS urgently will not be able to find available transmission resources, so the SL-PRS priority information is introduced. In this way, the user equipment can decide to avoid or preempt resources based on the SL-PRS priority of itself and other user equipment, so that high-priority services can be transmitted more reliably. Specifically, the second user equipment transmits the priority information of the first SL-PRS to the first user equipment. The priority information can be the transmission priority of the first SL-PRS. The higher the priority, the more important the first SL-PRS is, and its transmission success rate and low latency need to be guaranteed.

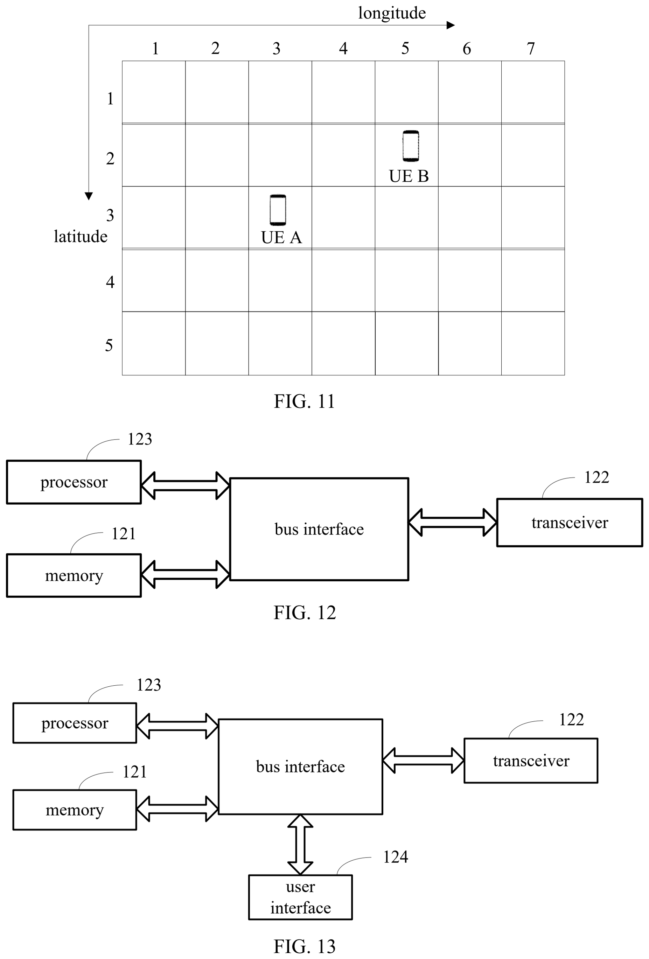

The first location information: the zone ID can be a geographical location grid ID of the transmitting user equipment A or the receiving user equipment B of the first SL-PRS. As shown in FIG. 11, each user equipment's location has a zone ID. Specifically, if the first user equipment receives zone IDs transmitted by the first base station, then an approximate distance between user equipment A and user equipment B can be calculated based on the zone IDs of the user equipment A and user equipment B; the first user equipment can subsequently assist in more accurate relative positioning based on the approximate distance.

From the above, this example adopts this SL-PRS resource information indication method, which enables the user equipment to determine the transmission priority of the SL-PRS and the approximate distance between the transmission and reception according to the first priority information and the first location information, so that the user equipment can improve the accuracy of the SL-PRS sidelink positioning according to the auxiliary information. The disadvantage is that the first priority information and the first location information need to be added to the first control information, which will bring certain standardization complexity and signaling overhead.

One embodiment of the present disclosure further provides an information transmission device, which is a first device, as shown in FIG. 12 and FIG. 13, including a memory 121, a transceiver 122, and a processor 123.

The memory 121 is used to store a computer program; the transceiver 122 is used to transmit and receive data under the control of the processor 123; the processor 123 is used to read the computer program in the memory 121 and perform the following operations:

transmitting first control information to a first user equipment through the transceiver 122, where the first control information is used to schedule a first sidelink positioning reference signal (SL-PRS).

The first device is a network device or a second user equipment; the first control information is information related to transmission resource of the first SL-PRS.

In the information transmission device provided in the embodiment of the present disclosure, the first control information is transmitted to the first user equipment, where the first control information is used to schedule a first sidelink positioning reference signal (SL-PRS), the first device is a network device or a second user equipment, and the first control information is information related to a transmission resource of the first SL-PRS; this can support the first user equipment to obtain the information related to the transmission resource of the first SL-PRS, and then the first user equipment completes reception and decoding of the first SL-PRS according to the information related to the transmission resource of the first SL-PRS, thereby supporting the network device or user equipment to complete the sidelink positioning according to the first SL-PRS, which well solves the problem in the related art that the user equipment cannot determine the various resource information of the to-be-received SL-PRS transmission.

Specifically, when the first device is implemented as a network device, as shown in FIG. 12, the transceiver 122 is used to receive and transmit data under the control of the processor 123.

In FIG. 12, a bus architecture may include any number of interconnected bus and bridge. Specifically, various circuits of one or more processors, which are represented by the processor 123, and one or more memories, which are represented by the memory 121, are linked together. The bus architecture may link various other circuits, such as a peripheral device, voltage regulator and a power management circuit together. These features are well known in this field; therefore, this disclosure does not make further description on these features. The bus interface provides an interface. The transceiver 122 may be multiple elements, including a transmitter and a receiver and provide units, which communicate with other devices on the transmission medium. The processor 123 is responsible for managing the bus architecture and the normal processing. The memory 1121 may be used to store data used by the processor 123 for performing operations.

The processor 123 may be a central processing unit (CPU), an application specific integrated circuit (ASIC), a field-programmable gate array (FPGA) or a complex programmable logic device (CPLD). The processor may also adopt multi-core architecture.

Specifically, when the first device is implemented as a second user equipment, as shown in FIG. 13, the transceiver 122 is used to receive and transmit data under the control of the processor 123.

In FIG. 13, a bus architecture may include any number of interconnected bus and bridge. Specifically, various circuits of one or more processors, which are represented by the processor 123, and one or more memories, which are represented by the memory 121, are linked together. The bus architecture may link various other circuits, such as a peripheral device, voltage regulator and a power management circuit together. These features are well known in this field; therefore, this disclosure does not make further description on these features. The bus interface provides an interface. The transceiver 122 may be multiple elements, including a transmitter and a receiver and provide units, which communicate with other devices on the transmission medium. The transmission medium includes radio channels, wired channels, optical cables, etc. For different UEs, a user interface 124 may be an interface that can be connected to external or internal devices. The connected devices include but are not limited to a small keyboard, a display, a speaker, a microphone, a joystick, etc.

The processor 123 is responsible for managing the bus architecture and the normal processing. The memory 121 may be used to store data used by the processor 123 for performing operations.

The processor calls the computer program stored in the memory to execute any method provided in the embodiment of the present disclosure according to obtained executable instructions. The processor and the memory may also be arranged physically separately.

In the embodiment of the present disclosure, the first control information includes at least one of the following: first resource pool information; first time-frequency resource information, where the first time-frequency resource information is information of time-frequency resources occupied by the first SL-PRS; second time-frequency resource information, where the second time-frequency resource information is information of time-frequency resources occupied by the physical sidelink control channel (PSCCH); first pattern information, where the first pattern information is pattern information related to the first SL-PRS; first time interval information; first priority information; first location information; first index number information, where the first index number information is index number information of the first SL-PRS; second index number information, where the second index number information is index number information of the user equipment; first cast type information; first measurement reporting information.

The first resource pool information includes type information of a first resource pool, where the type information is used to indicate that the first resource pool includes a dedicated resource pool and/or a shared resource pool; and/or, the first resource pool information includes index number information of the first resource pool; and/or, the first resource pool is at least one resource pool configured for the first SL-PRS.

In one embodiment of the present disclosure, the dedicated resource pool is a resource pool dedicated to the first SL-PRS and channels related to the SL-PRS; and/or, the shared resource pool is a resource pool shared by the first SL-PRS and channels related to sidelink communication.

The first control information is first downlink control information or first sidelink control information; and/or, the first control information is carried by a first control channel or a second control channel. The first control channel is physical downlink control channel (PDCCH), and the second control channel is PSCCH.

**In** the embodiment of the present disclosure, the first time-frequency resource information includes at least one of information of time domain resources occupied by the first SL-PRS and information of frequency domain resources occupied by the first SL-PRS.

The information of time domain resources occupied by the first SL-PRS includes at least one of a starting orthogonal frequency division multiplex (OFDM) symbol index number, an ending OFDM symbol index number and the number of OFDM symbols occupied by the first SL-PRS; and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In one embodiment of the present disclosure, the second time-frequency resource information includes at least one of information of time domain resources occupied by the PSCCH and information of frequency domain resources occupied by the PSCCH.

The PSCCH is associated with the first SL-PRS, and the PSCCH indicates information of time-frequency resources occupied by the first SL-PRS.

In one embodiment of the present disclosure, the information of the time domain resources occupied by the PSCCH includes at least one of a starting OFDM symbol index number, an ending OFDM symbol index number and the number of OFDM symbols occupied by the PSCCH; and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

The OFDM symbol index number includes at least one of an OFDM symbol index number within a slot, an OFDM symbol index number within a subframe, and an OFDM symbol index number within a radio frame.

In one embodiment of the present disclosure, the OFDM symbol index number in the radio frame includes: a system frame number, a slot number, and an OFDM symbol index number in the slot.

The first pattern information includes at least one of resource element offset information, comb information and mapping pattern information.

In one embodiment of the present disclosure, the resource element offset information includes at least one of a resource element offset and a resource element offset sequence; and/or, the comb information includes at least one of a comb size and a comb index number.

The first time interval information is a slot offset or time interval between a slot where the first control information is located and transmission or first transmission of the first SL-PRS.

In one embodiment of the present disclosure, the slot for transmission or first transmission of the first SL-PRS is a first sidelink slot whose starting time of a corresponding resource pool is no earlier than $T_1 - T_2/2 + M \times T_3$; where $T_1$ is a starting time of downlink slot carrying the corresponding first control information; $T_2$ is a timing advance value corresponding to a timing advance group (TAG) of a service cell that receives the first control information; M is a slot offset or time interval between the slot where the first control information is located and the transmission or first transmission of the first SL-PRS; $T_3$ is a duration of the sidelink slot.

The first priority information is information related to transmission priority of the first SL-PRS.

In one embodiment of the present disclosure, the first location information includes at least one of a zone identifier of a transmitting user equipment of the first SL-PRS and a zone identifier of a receiving user equipment of the first SL-PRS.

The first index number information includes at least one of index number information of a first SL-PRS resource, and index number information of a first SL-PRS resource set.

In one embodiment of the present disclosure, the second index number information includes at least one of index number information of a transmitting user equipment of the first SL-PRS, and index number information of a receiving user equipment of the first SL-PRS.

The first cast type information is used to indicate that the first SL-PRS is at least one type of unicast, multicast and broadcast.

In one embodiment of the present disclosure, the first measurement reporting information is used to indicate that a measurement report related to the first SL-PRS is transmitted to a location management function (LMF) device, or to the second user equipment, or to a third user equipment other than the first user equipment and the second user equipment, or to the network device.

The operation further includes: determining a target resource location based on the first control information; and transmitting the first SL-PRS at the target resource location through the transceiver.

In the embodiment of the present disclosure, the operation further includes: determining sidelink positioning information for the first user equipment according to the first SL-PRS.

It is to be noted here that the above device provided in the embodiment of the present disclosure can implement all the method steps implemented by the above first device side, and can achieve the same technical effect. The parts and beneficial effects of this embodiment that are the same as the method embodiment will not be described in detail here.

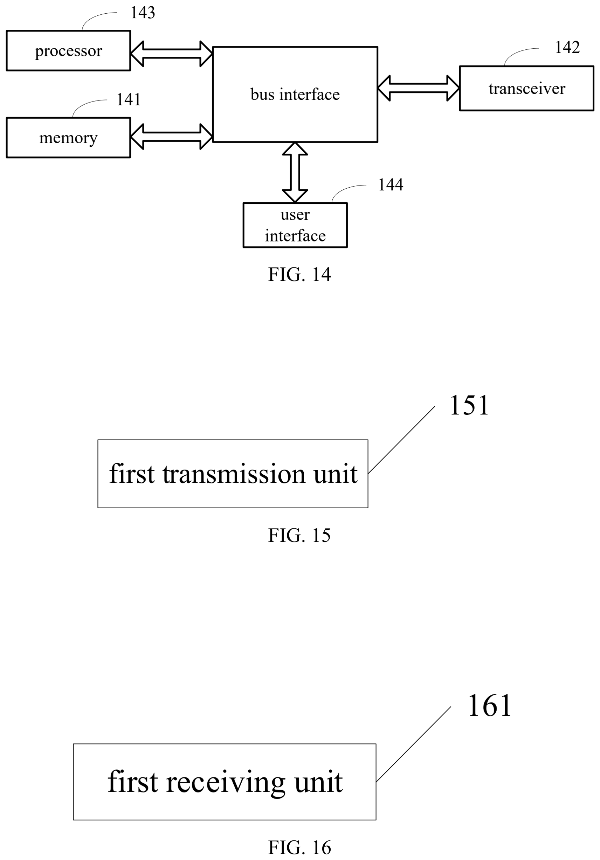

One embodiment of the present disclosure further provides an information transmission device, which is a first user equipment, as shown in FIG. 14, including a memory 141, a transceiver 142, and a processor 143.

The memory 141 is used to store a computer program; the transceiver 142 is used to transmit and receive data under the control of the processor 143; the processor 143 is used to read the computer program in the memory 141 and perform the following operations:

receiving, through the transceiver 142, first control information transmitted by a first device, where the first control information is used to schedule a first SL-PRS.

The first device is a network device or a second user equipment, and the first control information is information related to transmission resources of the first SL-PRS.

In the information transmission device provided in the embodiment of the present disclosure, first control information transmitted by a first device is received, where the first control information is used to schedule a first SL-PRS, and the first device is a network device or a second user equipment, and the first control information is information related to transmission resources of the first SL-PRS; this can support the first user equipment to obtain the information related to the transmission resource of the first SL-PRS, and then the first user equipment completes reception and decoding of the first SL-PRS according to the information related to the transmission resource of the first SL-PRS, thereby supporting the network device or user equipment to complete the sidelink positioning according to the first SL-PRS, which well solves the problem in the related art that the user equipment cannot determine the various resource information of the to-be-received SL-PRS transmission.

Specifically, the transceiver 142 is used to receive and transmit data under the control of the processor 143.

In FIG. 14, a bus architecture may include any number of interconnected bus and bridge. Specifically, various circuits of one or more processors, which are represented by the processor 143, and one or more memories, which are represented by the memory 141, are linked together. The bus architecture may link various other circuits, such as a peripheral device, voltage regulator and a power management circuit together. These features are well known in this field; therefore, this disclosure does not make further description on these features. The bus interface provides an interface. The transceiver 142 may be multiple elements, including a transmitter and a receiver and provide units, which communicate with other devices on the transmission medium. The transmission medium includes radio channels, wired channels, optical cables, etc. For different UEs, a user interface 144 may be an interface that can be connected to external or internal devices. The connected devices include but are not limited to a small keyboard, a display, a speaker, a microphone, a joystick, etc.

The processor 143 is responsible for managing the bus architecture and the normal processing. The memory 141 may be used to store data used by the processor 123 for performing operations.

Optionally, the processor 143 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In the embodiment of the present disclosure, the first control information includes at least one of the following: first resource pool information; first time-frequency resource information, where the first time-frequency resource information is information of time-frequency resources occupied by the first SL-PRS; second time-frequency resource information, where the second time-frequency resource information is information of time-frequency resources occupied by the physical sidelink control channel (PSCCH); first pattern information, where the first pattern information is pattern information related to the first SL-PRS; first time interval information; first priority information; first location information; first index number information, where the first index number information is index number information of the first SL-PRS; second index number information, where the second index number information is index number information of the user equipment; first cast type information; first measurement reporting information.

The first resource pool information includes type information of a first resource pool, where the type information is used to indicate that the first resource pool includes a dedicated resource pool and/or a shared resource pool; and/or, the first resource pool information includes index number information of the first resource pool; and/or, the first resource pool is at least one resource pool configured for the first SL-PRS.

In one embodiment of the present disclosure, the dedicated resource pool is a resource pool dedicated to the first SL-PRS and channels related to the SL-PRS; and/or, the shared resource pool is a resource pool shared by the first SL-PRS and channels related to sidelink communication.

The first control information is first downlink control information or first sidelink control information; and/or, the first control information is carried by a first control channel or a second control channel. The first control channel is physical downlink control channel (PDCCH), and the second control channel is PSCCH.

In the embodiment of the present disclosure, the first time-frequency resource information includes at least one of information of time domain resources occupied by the first SL-PRS and information of frequency domain resources occupied by the first SL-PRS.

The information of time domain resources occupied by the first SL-PRS includes at least one of a starting orthogonal frequency division multiplex (OFDM) symbol index number, an ending OFDM symbol index number and the number of OFDM symbols occupied by the first SL-PRS; and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In one embodiment of the present disclosure, the second time-frequency resource information includes at least one of information of time domain resources occupied by the PSCCH and information of frequency domain resources occupied by the PSCCH.

The PSCCH is associated with the first SL-PRS, and the PSCCH indicates information of time-frequency resources occupied by the first SL-PRS.

In one embodiment of the present disclosure, the information of the time domain resources occupied by the PSCCH includes at least one of a starting OFDM symbol index number, an ending OFDM symbol index number and the number of OFDM symbols occupied by the PSCCH; and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

The OFDM symbol index number includes at least one of an OFDM symbol index number within a slot, an OFDM symbol index number within a subframe, and an OFDM symbol index number within a radio frame.

In one embodiment of the present disclosure, the OFDM symbol index number in the radio frame includes: a system frame number, a slot number, and an OFDM symbol index number in the slot.

The first pattern information includes at least one of resource element offset information, comb information and mapping pattern information.

In one embodiment of the present disclosure, the resource element offset information includes at least one of a resource element offset and a resource element offset sequence; and/or, the comb information includes at least one of a comb size and a comb index number.

The first time interval information is a slot offset or time interval between a slot where the first control information is located and transmission or first transmission of the first SL-PRS.

In one embodiment of the present disclosure, the slot for transmission or first transmission of the first SL-PRS is a first sidelink slot whose starting time of a corresponding resource pool is no earlier than $T_1 - T_2/2 + M \times T_3$; where $T_1$ is a starting time of downlink slot carrying the corresponding first control information; $T_2$ is a timing advance value corresponding to a timing advance group (TAG) of a service cell that receives the first control information; M is a slot offset or time interval between the slot where the first control information is located and the transmission or first transmission of the first SL-PRS; $T_3$ is a duration of the sidelink slot.

The first priority information is information related to transmission priority of the first SL-PRS.

In one embodiment of the present disclosure, the first location information includes at least one of a zone identifier of a transmitting user equipment of the first SL-PRS and a zone identifier of a receiving user equipment of the first SL-PRS.

The first index number information includes at least one of index number information of a first SL-PRS resource, and index number information of a first SL-PRS resource set.

In one embodiment of the present disclosure, the second index number information includes at least one of index number information of a transmitting user equipment of the first SL-PRS, and index number information of a receiving user equipment of the first SL-PRS.

The first cast type information is used to indicate that the first SL-PRS is at least one type of unicast, multicast and broadcast.

In one embodiment of the present disclosure, the first measurement reporting information is used to indicate that a measurement report related to the first SL-PRS is transmitted to a location management function (LMF) device, or to the second user equipment, or to a third user equipment other than the first user equipment and the second user equipment, or to the network device.

The operation further includes: determining a target resource location based on the first control information; and receiving the first SL-PRS at the target resource location through the transceiver.

In the embodiment of the present disclosure, the operation further includes: determining sidelink positioning information for the first user equipment according to the first SL-PRS.

It is to be noted here that the above device provided in the embodiment of the present disclosure can implement all the method steps implemented by the above first user equipment side, and can achieve the same technical effect. The parts and beneficial effects of this embodiment that are the same as the method embodiment will not be described in detail here.

One embodiment of the present disclosure further provides an information transmission apparatus, applied to a first device, as shown in FIG. 15, including:

a first transmission unit 151 used to transmit first control information to a first user equipment; where the first control information is used to schedule a first sidelink positioning reference signal (SL-PRS), the first device is a network device or a second user equipment, and the first control information is information related to a transmission resource of the first SL-PRS.

The first device is a network device or a second user equipment; the first control information is information related to the transmission resource of the first SL-PRS.

In the information transmission apparatus provided in the embodiment of the present disclosure, the first control information is transmitted to the first user equipment, where the first control information is used to schedule a first sidelink positioning reference signal (SL-PRS), the first device is a network device or a second user equipment, and the first control information is information related to a transmission resource of the first SL-PRS; this can support the first user equipment to obtain the information related to the transmission resource of the first SL-PRS, and then the first user equipment completes reception and decoding of the first SL-PRS according to the information related to the transmission resource of the first SL-PRS, thereby supporting the network device or user equipment to complete the sidelink positioning according to the first SL-PRS, which well solves the problem in the related art that the user equipment cannot determine the various resource information of the to-be-received SL-PRS transmission.

In the embodiment of the present disclosure, the first control information includes at least one of the following: first resource pool information; first time-frequency resource information, where the first time-frequency resource information is information of time-frequency resources occupied by the first SL-PRS; second time-frequency resource information, where the second time-frequency resource information is information of time-frequency resources occupied by the physical sidelink control channel (PSCCH); first pattern information, where the first pattern information is pattern information related to the first SL-PRS; first time interval information; first priority information; first location information; first index number information, where the first index number information is index number information of the first SL-PRS; second index number information, where the second index number information is index number information of the user equipment; first cast type information; first measurement reporting information.

The first resource pool information includes type information of a first resource pool, where the type information is used to indicate that the first resource pool includes a dedicated resource pool and/or a shared resource pool; and/or, the first resource pool information includes index number information of the first resource pool; and/or, the first resource pool is at least one resource pool configured for the first SL-PRS.

In one embodiment of the present disclosure, the dedicated resource pool is a resource pool dedicated to the first SL-PRS and channels related to the SL-PRS; and/or, the shared resource pool is a resource pool shared by the first SL-PRS and channels related to sidelink communication.

The first control information is first downlink control information or first sidelink control information; and/or, the first control information is carried by a first control channel or a second control channel. The first control channel is physical downlink control channel (PDCCH), and the second control channel is PSCCH.

In the embodiment of the present disclosure, the first time-frequency resource information includes at least one of information of time domain resources occupied by the first SL-PRS and information of frequency domain resources occupied by the first SL-PRS.

The information of time domain resources occupied by the first SL-PRS includes at least one of a starting orthogonal frequency division multiplex (OFDM) symbol index number, an ending OFDM symbol index number and the number of OFDM symbols occupied by the first SL-PRS; and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In one embodiment of the present disclosure, the second time-frequency resource information includes at least one of information of time domain resources occupied by the PSCCH and information of frequency domain resources occupied by the PSCCH.

The PSCCH is associated with the first SL-PRS, and the PSCCH indicates information of time-frequency resources occupied by the first SL-PRS.

In one embodiment of the present disclosure, the information of the time domain resources occupied by the PSCCH includes at least one of a starting OFDM symbol index number, an ending OFDM symbol index number and the number of OFDM symbols occupied by the PSCCH; and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

The OFDM symbol index number includes at least one of an OFDM symbol index number within a slot, an OFDM symbol index number within a subframe, and an OFDM symbol index number within a radio frame.

In one embodiment of the present disclosure, the OFDM symbol index number in the radio frame includes: a system frame number, a slot number, and an OFDM symbol index number in the slot.

The first pattern information includes at least one of resource element offset information, comb information and mapping pattern information.

In one embodiment of the present disclosure, the resource element offset information includes at least one of a resource element offset and a resource element offset sequence; and/or, the comb information includes at least one of a comb size and a comb index number.

The first time interval information is a slot offset or time interval between a slot where the first control information is located and transmission or first transmission of the first SL-PRS.

In one embodiment of the present disclosure, the slot for transmission or first transmission of the first SL-PRS is a first sidelink slot whose starting time of a corresponding resource pool is no earlier than $T_1 - T_2/2 + M \times T_3$; where $T_1$ is a starting time of downlink slot carrying the corresponding first control information; $T_2$ is a timing advance value corresponding to a timing advance group (TAG) of a service cell that receives the first control information; M is a slot offset or time interval between the slot where the first control information is located and the transmission or first transmission of the first SL-PRS; $T_3$ is a duration of the sidelink slot.

The first priority information is information related to transmission priority of the first SL-PRS.

In one embodiment of the present disclosure, the first location information includes at least one of a zone identifier of a transmitting user equipment of the first SL-PRS and a zone identifier of a receiving user equipment of the first SL-PRS.

The first index number information includes at least one of index number information of a first SL-PRS resource, and index number information of a first SL-PRS resource set.

In one embodiment of the present disclosure, the second index number information includes at least one of index number information of a transmitting user equipment of the first SL-PRS, and index number information of a receiving user equipment of the first SL-PRS.

The first cast type information is used to indicate that the first SL-PRS is at least one type of unicast, multicast and broadcast.

In one embodiment of the present disclosure, the first measurement reporting information is used to indicate that a measurement report related to the first SL-PRS is transmitted to a location management function (LMF) device, or to the second user equipment, or to a third user equipment other than the first user equipment and the second user equipment, or to the network device.

Further, the information transmission apparatus further includes: a first determination unit used to determine a target resource location based on the first control information; and a second transmission unit used to transmit the first SL-PRS at the target resource location.

In the embodiment of the present disclosure, the information transmission apparatus further includes: a second determination unit used to determine sidelink positioning information for the first user equipment according to the first SL-PRS.

It should be noted here that the above apparatus provided in the embodiment of the present disclosure can implement all the method steps implemented by the above first device side method embodiment, and can achieve the same technical effect. The parts and beneficial effects of this embodiment that are the same as the method embodiment will not be described in detail here.

One embodiment of the present disclosure further provides an information transmission apparatus, which is applied to a first user equipment, as shown in FIG. 16, and includes:

a first receiving unit 161 used to receive first control information transmitted by a first device; where the first control information is used to schedule a first SL-PRS, and the first device is a network device or a second user equipment, and the first control information is information related to transmission resources of the first SL-PRS.

In the information transmission apparatus provided in the embodiment of the present disclosure, first control information transmitted by a first device is received, where the first control information is used to schedule a first SL-PRS, and the first device is a network device or a second user equipment, and the first control information is information related to transmission resources of the first SL-PRS; this can support the first user equipment to obtain the information related to the transmission resource of the first SL-PRS, and then the first user equipment completes reception and decoding of the first SL-PRS according to the information related to the transmission resource of the first SL-PRS, thereby supporting the network device or user equipment to complete the sidelink positioning according to the first SL-PRS, which well solves the problem in the related art that the user equipment cannot determine the various resource information of the to-be-received SL-PRS transmission.

In one embodiment of the present disclosure, the first control information includes at least one of the following: first resource pool information; first time-frequency resource information, where the first time-frequency resource information is information of time-frequency resources occupied by the first SL-PRS; second time-frequency resource information, where the second time-frequency resource information is information of time-frequency resources occupied by the physical sidelink control channel (PSCCH); first pattern information, where the first pattern information is pattern information related to the first SL-PRS; first time interval information; first priority information; first location information; first index number information, where the first index number information is index number information of the first SL-PRS; second index number information, where the second index number information is index number information of the user equipment; first cast type information; first measurement reporting information.

The first resource pool information includes type information of a first resource pool, where the type information is used to indicate that the first resource pool includes a dedicated resource pool and/or a shared resource pool; and/or, the first resource pool information includes index number information of the first resource pool; and/or, the first resource pool is at least one resource pool configured for the first SL-PRS.

In one embodiment of the present disclosure, the dedicated resource pool is a resource pool dedicated to the first SL-PRS and channels related to the SL-PRS; and/or, the shared resource pool is a resource pool shared by the first SL-PRS and channels related to sidelink communication.

The first control information is first downlink control information or first sidelink control information; and/or, the first control information is carried by a first control channel or a second control channel. The first control channel is physical downlink control channel (PDCCH), and the second control channel is PSCCH.

In the embodiment of the present disclosure, the first time-frequency resource information includes at least one of information of time domain resources occupied by the first SL-PRS and information of frequency domain resources occupied by the first SL-PRS.

The information of time domain resources occupied by the first SL-PRS includes at least one of a starting orthogonal frequency division multiplex (OFDM) symbol index number, an ending OFDM symbol index number and the number of OFDM symbols occupied by the first SL-PRS; and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

In one embodiment of the present disclosure, the second time-frequency resource information includes at least one of information of time domain resources occupied by the PSCCH and information of frequency domain resources occupied by the PSCCH.

The PSCCH is associated with the first SL-PRS, and the PSCCH indicates information of time-frequency resources occupied by the first SL-PRS.

In one embodiment of the present disclosure, the information of the time domain resources occupied by the PSCCH includes at least one of a starting OFDM symbol index number, an ending OFDM symbol index number and the number of OFDM symbols occupied by the PSCCH; and/or, the information of the frequency domain resources occupied by the PSCCH includes at least one of a starting PRB index number, an ending PRB index number, the number of PRBs, a starting subchannel index number, an ending subchannel index number and the number of subchannels occupied by the PSCCH.

The OFDM symbol index number includes at least one of an OFDM symbol index number within a slot, an OFDM symbol index number within a subframe, and an OFDM symbol index number within a radio frame.

In one embodiment of the present disclosure, the OFDM symbol index number in the radio frame includes: a system frame number, a slot number, and an OFDM symbol index number in the slot.

The first pattern information includes at least one of resource element offset information, comb information and mapping pattern information.

In one embodiment of the present disclosure, the resource element offset information includes at least one of a resource element offset and a resource element offset sequence; and/or, the comb information includes at least one of a comb size and a comb index number.

The first time interval information is a slot offset or time interval between a slot where the first control information is located and transmission or first transmission of the first SL-PRS.

In one embodiment of the present disclosure, the slot for transmission or first transmission of the first SL-PRS is a first sidelink slot whose starting time of a corresponding resource pool is no earlier than $T_1 - T_2/2 + M \times T_3$; where $T_1$ is a starting time of downlink slot carrying the corresponding first control information; $T_2$ is a timing advance value corresponding to a timing advance group (TAG) of a service cell that receives the first control information; M is a slot offset or time interval between the slot where the first control information is located and the transmission or first transmission of the first SL-PRS; $T_3$ is a duration of the sidelink slot.

The first priority information is information related to transmission priority of the first SL-PRS.

In one embodiment of the present disclosure, the first location information includes at least one of a zone identifier of a transmitting user equipment of the first SL-PRS and a zone identifier of a receiving user equipment of the first SL-PRS.

The first index number information includes at least one of index number information of a first SL-PRS resource, and index number information of a first SL-PRS resource set.

In one embodiment of the present disclosure, the second index number information includes at least one of index number information of a transmitting user equipment of the first SL-PRS, and index number information of a receiving user equipment of the first SL-PRS.

The first cast type information is used to indicate that the first SL-PRS is at least one type of unicast, multicast and broadcast.

In one embodiment of the present disclosure, the first measurement reporting information is used to indicate that a measurement report related to the first SL-PRS is transmitted to a location management function (LMF) device, or to the second user equipment, or to a third user equipment other than the first user equipment and the second user equipment, or to the network device.

The information transmission apparatus further includes: a third determination unit used to determine a target resource location based on the first control information; and a second receiving unit used to receive the first SL-PRS at the target resource location.

In the embodiment of the present disclosure, the information transmission apparatus further includes a fourth determination unit used to determine sidelink positioning information for the first user equipment according to the first SL-PRS.

It is to be noted here that the above apparatus provided in the embodiment of the present disclosure can implement all the method steps implemented by the above first user equipment side method embodiment, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a non-transitory readable storage medium, which stores a computer program, and the computer program is used to cause a processor to execute the above information transmission method on the first device side or the first user equipment side.

The non-transitory readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

The implementation embodiments of the information transmission method on the first device side or the first user equipment side are all applicable to the embodiments of the non-transitory readable storage medium, and can also achieve the same technical effect.

A person skilled in the art should understand that the embodiments of this application may be provided as methods, systems, or computer program products. Therefore, this application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

This application is described with reference to flowcharts and/or block diagrams of methods, devices (systems), and computer program products according to the embodiments of this application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

**Claims**

1.  An information transmission method, applied to a first device, comprising:

    transmitting first control information to a first user equipment; wherein the first control information is used to schedule a first sidelink positioning reference signal (SL-PRS);
    wherein the first device is a network device or a second user equipment, and the first control information is information related to a transmission resource of the first SL-PRS.

2.  The method according to claim 1, wherein the first control information includes at least one of the following:

    first resource pool information;
    first time-frequency resource information, wherein the first time-frequency resource information is information of time-frequency resources occupied by the first SL-PRS;
    second time-frequency resource information, wherein the second time-frequency resource information is information of time-frequency resource occupied by a physical sidelink control channel (PSCCH);
    first pattern information, wherein the first pattern information is pattern information related to the first SL-PRS;
    first time interval information;
    first priority information;
    first location information;
    first index number information, wherein the first index number information is index number information of the first SL-PRS;
    second index number information, wherein the second index number information is index number information of the user equipment;
    first cast type information; and
    first measurement reporting information.

3.  The method according to claim 2, wherein the first resource pool information includes type information of a first resource pool, and the type information is used to indicate that the first resource pool includes a dedicated resource pool and/or a shared resource pool;

    and/or, the first resource pool information includes index number information of the first resource pool;
    and/or, the first resource pool is at least one resource pool configured for the first SL-PRS.

4.  The method according to claim 3, wherein the dedicated resource pool is a resource pool dedicated to the first SL-PRS and channels related to an SL-PRS; and/or, the shared resource pool is a resource pool shared by the first SL-PRS and channels related to sidelink communication.

5.  The method according to claim 2, wherein the first control information is first downlink control information or first sidelink control information;
    and/or, the first control information is carried by a first control channel or a second control channel; the first control channel is physical downlink control channel (PDCCH), and the second control channel is PSCCH.

6. The method according to claim 2, wherein the first time-frequency resource information includes at least one of information of time domain resources occupied by the first SL-PRS and information of frequency domain resources occupied by the first SL-PRS.

7. The method according to claim 6, wherein the information of time domain resources occupied by the first SL-PRS includes at least one of a starting orthogonal frequency division multiplex (OFDM) symbol index number, an ending OFDM symbol index number, and the number of OFDM symbols occupied by the first SL-PRS;
and/or, the information of frequency domain resources occupied by the first SL-PRS includes at least one of a starting physical resource block (PRB) index number, an ending PRB index number, the number of PRBs, a starting subchannel index number, an ending subchannel index number and the number of subchannels occupied by the first SL-PRS.

8. The method according to claim 2, wherein the second time-frequency resource information includes at least one of information of time domain resources occupied by the PSCCH and information of frequency domain resources occupied by the PSCCH.

9. The method according to claim 8, wherein the PSCCH is associated with the first SL-PRS, and the PSCCH indicates information of time-frequency resources occupied by the first SL-PRS.

10. The method according to claim 8, wherein the information of the time domain resources occupied by the PSCCH includes at least one of a starting OFDM symbol index number, an ending OFDM symbol index number, and the number of OFDM symbols occupied by the PSCCH;
and/or, the information of the frequency domain resources occupied by the PSCCH includes at least one of a starting PRB index number, an ending PRB index number, the number of PRBs, a starting subchannel index number, an ending subchannel index number, and the number of subchannels occupied by the PSCCH.

11. The method according to claim 7 or 10, wherein the OFDM symbol index number includes at least one of an OFDM symbol index number within a slot, an OFDM symbol index number within a subframe, and an OFDM symbol index number within a radio frame.

12. The method according to claim 11, wherein the OFDM symbol index number in the radio frame includes: a system frame number, a slot number, and an OFDM symbol index number in the slot.

13. The method according to claim 12, wherein the first pattern information includes at least one of resource element offset information, comb information, and mapping pattern information.

14. The method according to claim 13, wherein the resource element offset information includes at least one of a resource element offset and a resource element offset sequence;
and/or, the comb information includes at least one of a comb size and a comb index number.

15. The method according to claim 2, wherein the first time interval information is a slot offset or time interval between a slot where the first control information is located and transmission or first transmission of the first SL-PRS.

16. The method according to claim 2 or 15, wherein a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;
$T_2$ is a timing advance value corresponding to a timing advance group (TAG) of a service cell that receives the first control information;
M is a slot offset or time interval between the slot where the first control information is located and the transmission or first transmission of the first SL-PRS;
$T_3$ is a duration of the sidelink slot.

17. The method according to claim 2, wherein the first priority information is information related to transmission priority of the first SL-PRS.

18. The method according to claim 2, wherein the first location information includes at least one of a zone identifier of a transmitting user equipment of the first SL-PRS and a zone identifier of a receiving user equipment of the first SL-PRS.

19. The method according to claim 2, wherein the first index number information includes at least one of index number information of a first SL-PRS resource, and index number information of a first SL-PRS resource set.

20. The method according to claim 2, wherein the second index number information includes at least one of index number information of a transmitting user equipment of the first SL-PRS, and index number information of a receiving user equipment of the first SL-PRS.

21. The method according to claim 2, wherein the first cast type information is used to indicate that the first SL-PRS is at least one type of unicast, multicast and broadcast.

22. The method according to claim 2, wherein the first measurement reporting information is used to indicate that a measurement report related to the first SL-PRS is transmitted to a location management function (LMF) device, or to the second user equipment, or to a third user equipment other than the first user equipment and the second user equipment, or to the network device.

23. The method according to claim 1, further comprising:

   determining a target resource location based on the first control information; and
   transmitting the first SL-PRS at the target resource location.

24. The method according to claim 23, further comprising:
   determining sidelink positioning information for the first user equipment according to the first SL-PRS.

25. An information transmission method, applied to a first user equipment, comprising:

   receiving first control information transmitted by a first device; wherein the first control information is used to schedule a first SL-PRS;
   wherein the first device is a network device or a second user equipment, and the first control information is information related to a transmission resource of the first SL-PRS.

26. The method according to claim 25, wherein the first control information includes at least one of the following:

   first resource pool information;
   first time-frequency resource information, wherein the first time-frequency resource information is information of time-frequency resources occupied by the first SL-PRS;
   second time-frequency resource information, wherein the second time-frequency resource information is information of time-frequency resource occupied by a physical sidelink control channel (PSCCH);
   first pattern information, wherein the first pattern information is pattern information related to the first SL-PRS;
   first time interval information;
   first priority information;
   first location information;
   first index number information, wherein the first index number information is index number information of the first SL-PRS;
   second index number information, wherein the second index number information is index number information of the user equipment;
   first cast type information; and
   first measurement reporting information.

27. The method according to claim 26, wherein the first resource pool information includes type information of a first resource pool, and the type information is used to indicate that the first resource pool includes a dedicated resource pool and/or a shared resource pool;

   and/or, the first resource pool information includes index number information of the first resource pool;
   and/or, the first resource pool is at least one resource pool configured for the first SL-PRS.

28. The method according to claim 27, wherein the dedicated resource pool is a resource pool dedicated to the first SL-PRS and channels related to an SL-PRS; and/or, the shared resource pool is a resource pool shared by the first SL-PRS and channels related to sidelink communication.

29. The method according to claim 26, wherein the first control information is first downlink control information or first sidelink control information;

and/or, the first control information is carried by a first control channel or a second control channel; the first control channel is physical downlink control channel (PDCCH), and the second control channel is PSCCH.

30. The method according to claim 26, wherein the first time-frequency resource information includes at least one of information of time domain resources occupied by the first SL-PRS and information of frequency domain resources occupied by the first SL-PRS.

31. The method according to claim 30, wherein the information of time domain resources occupied by the first SL-PRS includes at least one of a starting orthogonal frequency division multiplex (OFDM) symbol index number, an ending OFDM symbol index number, and the number of OFDM symbols occupied by the first SL-PRS;

and/or, the information of frequency domain resources occupied by the first SL-PRS includes at least one of a starting physical resource block (PRB) index number, an ending PRB index number, the number of PRBs, a starting subchannel index number, an ending subchannel index number, and the number of subchannels occupied by the first SL-PRS.

32. The method according to claim 26, wherein the second time-frequency resource information includes at least one of information of time domain resources occupied by the PSCCH and information of frequency domain resources occupied by the PSCCH.

33. The method according to claim 32, wherein the PSCCH is associated with the first SL-PRS, and the PSCCH indicates information of time-frequency resources occupied by the first SL-PRS.

34. The method according to claim 32, wherein the information of the time domain resources occupied by the PSCCH includes at least one of a starting OFDM symbol index number, an ending OFDM symbol index number, and the number of OFDM symbols occupied by the PSCCH;

and/or, the information of the frequency domain resources occupied by the PSCCH includes at least one of a starting PRB index number, an ending PRB index number, the number of PRBs, a starting subchannel index number, an ending subchannel index number, and the number of subchannels occupied by the PSCCH.

35. The method according to claim 31 or 34, wherein the OFDM symbol index number includes at least one of an OFDM symbol index number within a slot, an OFDM symbol index number within a subframe, and an OFDM symbol index number within a radio frame.

36. The method according to claim 35, wherein the OFDM symbol index number in the radio frame includes: a system frame number, a slot number, and an OFDM symbol index number in the slot.

37. The method according to claim 26, wherein the first pattern information includes at least one of resource element offset information, comb information, and mapping pattern information.

38. The method according to claim 37, wherein the resource element offset information includes at least one of a resource element offset and a resource element offset sequence;

and/or, the comb information includes at least one of a comb size and a comb index number.

39. The method according to claim 26, wherein the first time interval information is a slot offset or time interval between a slot where the first control information is located and transmission or first transmission of the first SL-PRS.

40. The method according to claim 26 or 39, wherein a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;

$T_2$ is a timing advance value corresponding to a timing advance group (TAG) of a service cell that receives the first control information;

M is a slot offset or time interval between the slot where the first control information is located and the transmission or first transmission of the first SL-PRS;

$T_3$ is a duration of the sidelink slot.

41. The method according to claim 26, wherein the first priority information is information related to transmission priority of the first SL-PRS.

42. The method according to claim 26, wherein the first location information includes at least one of a zone identifier of a transmitting user equipment of the first SL-PRS and a zone identifier of a receiving user equipment of the first SL-PRS.

43. The method according to claim 26, wherein the first index number information includes at least one of index number information of a first SL-PRS resource, and index number information of a first SL-PRS resource set.

44. The method according to claim 26, wherein the second index number information includes at least one of index number information of a transmitting user equipment of the first SL-PRS, and index number information of a receiving user equipment of the first SL-PRS.

45. The method according to claim 26, wherein the first cast type information is used to indicate that the first SL-PRS is at least one type of unicast, multicast and broadcast.

46. The method according to claim 26, wherein the first measurement reporting information is used to indicate that a measurement report related to the first SL-PRS is transmitted to a location management function (LMF) device, or to the second user equipment, or to a third user equipment other than the first user equipment and the second user equipment, or to the network device.

47. The method according to claim 25, further comprising:

   determining a target resource location based on the first control information; and
   receiving the first SL-PRS at the target resource location.

48. The method according to claim 47, further comprising:
   determining sidelink positioning information for the first user equipment according to the first SL-PRS.

49. An information transmission device, which is a first device, comprising: a memory, a transceiver, and a processor; wherein the memory is used to store a computer program; the transceiver is used to transmit and receive data under the control of the processor; the processor is used to read the computer program in the memory and perform the following operations:

   transmitting first control information to a first user equipment through the transceiver; wherein the first control information is used to schedule a first sidelink positioning reference signal (SL-PRS); wherein the first device is a network device or a second user equipment, and the first control information is information related to a transmission resource of the first SL-PRS.

50. The device according to claim 49, wherein the first control information includes at least one of the following:

   first resource pool information;
   first time-frequency resource information, wherein the first time-frequency resource information is information of time-frequency resources occupied by the first SL-PRS;
   second time-frequency resource information, wherein the second time-frequency resource information is information of time-frequency resource occupied by a physical sidelink control channel (PSCCH);
   first pattern information, wherein the first pattern information is pattern information related to the first SL-PRS;
   first time interval information;
   first priority information;
   first location information;
   first index number information, wherein the first index number information is index number information of the first SL-PRS;
   second index number information, wherein the second index number information is index number information of the user equipment;
   first cast type information; and
   first measurement reporting information.

51. The device according to claim 50, wherein the first resource pool information includes type information of a first resource pool, and the type information is used to indicate that the first resource pool includes a dedicated resource pool and/or a shared resource pool;

and/or, the first resource pool information includes index number information of the first resource pool;
and/or, the first resource pool is at least one resource pool configured for the first SL-PRS.

52. The device according to claim 51, wherein the dedicated resource pool is a resource pool dedicated to the first SL-PRS and channels related to an SL-PRS; and/or, the shared resource pool is a resource pool shared by the first SL-PRS and channels related to sidelink communication.

53. The device according to claim 50, wherein the first control information is first downlink control information or first sidelink control information;
and/or, the first control information is carried by a first control channel or a second control channel; the first control channel is physical downlink control channel (PDCCH), and the second control channel is PSCCH.

54. The device according to claim 50, wherein the first time-frequency resource information includes at least one of information of time domain resources occupied by the first SL-PRS and information of frequency domain resources occupied by the first SL-PRS.

55. The device according to claim 54, wherein the information of time domain resources occupied by the first SL-PRS includes at least one of a starting orthogonal frequency division multiplex (OFDM) symbol index number, an ending OFDM symbol index number, and the number of OFDM symbols occupied by the first SL-PRS;
and/or, the information of frequency domain resources occupied by the first SL-PRS includes at least one of a starting physical resource block (PRB) index number, an ending PRB index number, the number of PRBs, a starting subchannel index number, an ending subchannel index number, and the number of subchannels occupied by the first SL-PRS.

56. The device according to claim 50, wherein the second time-frequency resource information includes at least one of information of time domain resources occupied by the PSCCH and information of frequency domain resources occupied by the PSCCH.

57. The device according to claim 56, wherein the PSCCH is associated with the first SL-PRS, and the PSCCH indicates information of time-frequency resources occupied by the first SL-PRS.

58. The device according to claim 56, wherein the information of the time domain resources occupied by the PSCCH includes at least one of a starting OFDM symbol index number, an ending OFDM symbol index number, and the number of OFDM symbols occupied by the PSCCH;
and/or, the information of the frequency domain resources occupied by the PSCCH includes at least one of a starting PRB index number, an ending PRB index number, the number of PRBs, a starting subchannel index number, an ending subchannel index number, and the number of subchannels occupied by the PSCCH.

59. The device according to claim 55 or 58, wherein the OFDM symbol index number includes at least one of an OFDM symbol index number within a slot, an OFDM symbol index number within a subframe, and an OFDM symbol index number within a radio frame.

60. The device according to claim 59, wherein the OFDM symbol index number in the radio frame includes: a system frame number, a slot number, and an OFDM symbol index number in the slot.

61. The device according to claim 50, wherein the first pattern information includes at least one of resource element offset information, comb information, and mapping pattern information.

62. The device according to claim 61, wherein the resource element offset information includes at least one of a resource element offset and a resource element offset sequence;
and/or, the comb information includes at least one of a comb size and a comb index number.

63. The device according to claim 50, wherein the first time interval information is a slot offset or time interval between a slot where the first control information is located and transmission or first transmission of the first SL-PRS.

64. The device according to claim 50 or 63, wherein a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;
$T_2$ is a timing advance value corresponding to a timing advance group (TAG) of a service cell that receives the first control information;
M is a slot offset or time interval between the slot where the first control information is located and the transmission or first transmission of the first SL-PRS;
$T_3$ is a duration of the sidelink slot.

65. The device according to claim 50, wherein the first priority information is information related to transmission priority of the first SL-PRS.

66. The device according to claim 50, wherein the first location information includes at least one of a zone identifier of a transmitting user equipment of the first SL-PRS and a zone identifier of a receiving user equipment of the first SL-PRS.

67. The device according to claim 50, wherein the first index number information includes at least one of index number information of a first SL-PRS resource, and index number information of a first SL-PRS resource set.

68. The device according to claim 50, wherein the second index number information includes at least one of index number information of a transmitting user equipment of the first SL-PRS, and index number information of a receiving user equipment of the first SL-PRS.

69. The device according to claim 50, wherein the first cast type information is used to indicate that the first SL-PRS is at least one type of unicast, multicast and broadcast.

70. The device according to claim 50, wherein the first measurement reporting information is used to indicate that a measurement report related to the first SL-PRS is transmitted to a location management function (LMF) device, or to the second user equipment, or to a third user equipment other than the first user equipment and the second user equipment, or to the network device.

71. The device according to claim 49, wherein the operations further comprise:

determining a target resource location based on the first control information; and
transmitting the first SL-PRS at the target resource location.

72. The device according to claim 71, wherein the operations further comprise:
determining sidelink positioning information for the first user equipment according to the first SL-PRS.

73. An information transmission device, which is a first user equipment, comprising: a memory, a transceiver, and a processor;
wherein the memory is used to store a computer program; the transceiver is used to transmit and receive data under the control of the processor; the processor is used to read the computer program in the memory and perform the following operations:

receiving, through the transceiver, first control information transmitted by a first device; wherein the first control information is used to schedule a first SL-PRS;
wherein the first device is a network device or a second user equipment, and the first control information is information related to a transmission resource of the first SL-PRS.

74. The device according to claim 73, wherein the first control information includes at least one of the following:

first resource pool information;
first time-frequency resource information, wherein the first time-frequency resource information is information of time-frequency resources occupied by the first SL-PRS;
second time-frequency resource information, wherein the second time-frequency resource information is information of time-frequency resource occupied by a physical sidelink control channel (PSCCH);
first pattern information, wherein the first pattern information is pattern information related to the first SL-PRS;

first time interval information;
first priority information;
first location information;
first index number information, wherein the first index number information is index number information of the first SL-PRS;
second index number information, wherein the second index number information is index number information of the user equipment;
first cast type information; and
first measurement reporting information.

75. The device according to claim 74, wherein the first resource pool information includes type information of a first resource pool, and the type information is used to indicate that the first resource pool includes a dedicated resource pool and/or a shared resource pool;

and/or, the first resource pool information includes index number information of the first resource pool;
and/or, the first resource pool is at least one resource pool configured for the first SL-PRS.

76. The device according to claim 75, wherein the dedicated resource pool is a resource pool dedicated to the first SL-PRS and channels related to an SL-PRS; and/or, the shared resource pool is a resource pool shared by the first SL-PRS and channels related to sidelink communication.

77. The device according to claim 74, wherein the first control information is first downlink control information or first sidelink control information;
and/or, the first control information is carried by a first control channel or a second control channel; the first control channel is physical downlink control channel (PDCCH), and the second control channel is PSCCH.

78. The device according to claim 74, wherein the first time-frequency resource information includes at least one of information of time domain resources occupied by the first SL-PRS and information of frequency domain resources occupied by the first SL-PRS.

79. The device according to claim 78, wherein the information of time domain resources occupied by the first SL-PRS includes at least one of a starting orthogonal frequency division multiplex (OFDM) symbol index number, an ending OFDM symbol index number, and the number of OFDM symbols occupied by the first SL-PRS;
and/or, the information of frequency domain resources occupied by the first SL-PRS includes at least one of a starting physical resource block (PRB) index number, an ending PRB index number, the number of PRBs, a starting subchannel index number, an ending subchannel index number, and the number of subchannels occupied by the first SL-PRS.

80. The device according to claim 74, wherein the second time-frequency resource information includes at least one of information of time domain resources occupied by the PSCCH and information of frequency domain resources occupied by the PSCCH.

81. The device according to claim 80, wherein the PSCCH is associated with the first SL-PRS, and the PSCCH indicates information of time-frequency resources occupied by the first SL-PRS.

82. The device according to claim 80, wherein the information of the time domain resources occupied by the PSCCH includes at least one of a starting OFDM symbol index number, an ending OFDM symbol index number, and the number of OFDM symbols occupied by the PSCCH;
and/or, the information of the frequency domain resources occupied by the PSCCH includes at least one of a starting PRB index number, an ending PRB index number, the number of PRBs, a starting subchannel index number, an ending subchannel index number, and the number of subchannels occupied by the PSCCH.

83. The device according to claim 79 or 82, wherein the OFDM symbol index number includes at least one of an OFDM symbol index number within a slot, an OFDM symbol index number within a subframe, and an OFDM symbol index number within a radio frame.

84. The device according to claim 83, wherein the OFDM symbol index number in the radio frame includes: a system frame number, a slot number, and an OFDM symbol index number in the slot.

85. The device according to claim 74, wherein the first pattern information includes at least one of resource element offset information, comb information, and mapping pattern information.

86. The device according to claim 85, wherein the resource element offset information includes at least one of a resource element offset and a resource element offset sequence;
and/or, the comb information includes at least one of a comb size and a comb index number.

87. The device according to claim 74, wherein the first time interval information is a slot offset or time interval between a slot where the first control information is located and transmission or first transmission of the first SL-PRS.

88. The device according to claim 74 or 87, wherein a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;
$T_2$ is a timing advance value corresponding to a timing advance group (TAG) of a service cell that receives the first control information;
M is a slot offset or time interval between the slot where the first control information is located and the transmission or first transmission of the first SL-PRS;
$T_3$ is a duration of the sidelink slot.

89. The device according to claim 74, wherein the first priority information is information related to transmission priority of the first SL-PRS.

90. The device according to claim 74, wherein the first location information includes at least one of a zone identifier of a transmitting user equipment of the first SL-PRS and a zone identifier of a receiving user equipment of the first SL-PRS.

91. The device according to claim 74, wherein the first index number information includes at least one of index number information of a first SL-PRS resource, and index number information of a first SL-PRS resource set.

92. The device according to claim 74, wherein the second index number information includes at least one of index number information of a transmitting user equipment of the first SL-PRS, and index number information of a receiving user equipment of the first SL-PRS.

93. The device according to claim 74, wherein the first cast type information is used to indicate that the first SL-PRS is at least one type of unicast, multicast and broadcast.

94. The device according to claim 74, wherein the first measurement reporting information is used to indicate that a measurement report related to the first SL-PRS is transmitted to a location management function (LMF) device, or to the second user equipment, or to a third user equipment other than the first user equipment and the second user equipment, or to the network device.

95. The device according to claim 73, wherein the operations further comprise:

determining a target resource location based on the first control information; and
receiving the first SL-PRS at the target resource location.

96. The device according to claim 95, wherein the operations further comprise:
determining sidelink positioning information for the first user equipment according to the first SL-PRS.

97. An information transmission apparatus, comprising:

a first transmission unit used to transmit first control information to a first user equipment; wherein the first control information is used to schedule a first sidelink positioning reference signal (SL-PRS);
wherein the first device is a network device or a second user equipment, and the first control information is information related to a transmission resource of the first SL-PRS.

98. The apparatus according to claim 97, wherein the first control information includes at least one of the following:

first resource pool information;

first time-frequency resource information, wherein the first time-frequency resource information is information of time-frequency resources occupied by the first SL-PRS;

second time-frequency resource information, wherein the second time-frequency resource information is information of time-frequency resource occupied by a physical sidelink control channel (PSCCH);

first pattern information, wherein the first pattern information is pattern information related to the first SL-PRS;

first time interval information;

first priority information;

first location information;

first index number information, wherein the first index number information is index number information of the first SL-PRS;

second index number information, wherein the second index number information is index number information of the user equipment;

first cast type information; and

first measurement reporting information.

99. The apparatus according to claim 98, wherein the first resource pool information includes type information of a first resource pool, and the type information is used to indicate that the first resource pool includes a dedicated resource pool and/or a shared resource pool;

and/or, the first resource pool information includes index number information of the first resource pool;

and/or, the first resource pool is at least one resource pool configured for the first SL-PRS.

100.
The apparatus according to claim 99, wherein the dedicated resource pool is a resource pool dedicated to the first SL-PRS and channels related to an SL-PRS; and/or, the shared resource pool is a resource pool shared by the first SL-PRS and channels related to sidelink communication.

101.
The apparatus according to claim 98, wherein the first control information is first downlink control information or first sidelink control information;

and/or, the first control information is carried by a first control channel or a second control channel; the first control channel is physical downlink control channel (PDCCH), and the second control channel is PSCCH.

102.
The apparatus according to claim 98, wherein the first time-frequency resource information includes at least one of information of time domain resources occupied by the first SL-PRS and information of frequency domain resources occupied by the first SL-PRS.

103.
The apparatus according to claim 102, wherein the information of time domain resources occupied by the first SL-PRS includes at least one of a starting orthogonal frequency division multiplex (OFDM) symbol index number, an ending OFDM symbol index number, and the number of OFDM symbols occupied by the first SL-PRS;

and/or, the information of frequency domain resources occupied by the first SL-PRS includes at least one of a starting physical resource block (PRB) index number, an ending PRB index number, the number of PRBs, a starting subchannel index number, an ending subchannel index number, and the number of subchannels occupied by the first SL-PRS.

104.
The apparatus according to claim 98, wherein the second time-frequency resource information includes at least one of information of time domain resources occupied by the PSCCH and information of frequency domain resources occupied by the PSCCH.

105.
The apparatus according to claim 104, wherein the PSCCH is associated with the first SL-PRS, and the PSCCH indicates information of time-frequency resources occupied by the first SL-PRS.

106.
The apparatus according to claim 104, wherein the information of the time domain resources occupied by the PSCCH includes at least one of a starting OFDM symbol index number, an ending OFDM symbol index number, and the number of OFDM symbols occupied by the PSCCH;

and/or, the information of the frequency domain resources occupied by the PSCCH includes at least one of a starting PRB index number, an ending PRB index number, the number of PRBs, a starting subchannel index number, an ending subchannel index number, and the number of subchannels occupied by the PSCCH.

107.
The apparatus according to claim 103 or 106, wherein the OFDM symbol index number includes at least one of an OFDM symbol index number within a slot, an OFDM symbol index number within a subframe, and an OFDM symbol index number within a radio frame.

108.
The apparatus according to claim 107, wherein the OFDM symbol index number in the radio frame includes: a system frame number, a slot number, and an OFDM symbol index number in the slot.

109.
The apparatus according to claim 98, wherein the first pattern information includes at least one of resource element offset information, comb information, and mapping pattern information.

110.
The apparatus according to claim 109, wherein the resource element offset information includes at least one of a resource element offset and a resource element offset sequence;

and/or, the comb information includes at least one of a comb size and a comb index number.

111. The apparatus according to claim 98, wherein the first time interval information is a slot offset or time interval between a slot where the first control information is located and transmission or first transmission of the first SL-PRS.

112.
The apparatus according to claim 98 or 111, wherein a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;

$T_2$ is a timing advance value corresponding to a timing advance group (TAG) of a service cell that receives the first control information;

M is a slot offset or time interval between the slot where the first control information is located and the transmission or first transmission of the first SL-PRS;

$T_3$ is a duration of the sidelink slot.

113.
The apparatus according to claim 98, wherein the first priority information is information related to transmission priority of the first SL-PRS.

114.
The apparatus according to claim 98, wherein the first location information includes at least one of a zone identifier of a transmitting user equipment of the first SL-PRS and a zone identifier of a receiving user equipment of the first SL-PRS.

115.
The apparatus according to claim 98, wherein the first index number information includes at least one of index number information of a first SL-PRS resource, and index number information of a first SL-PRS resource set.

116.
The apparatus according to claim 98, wherein the second index number information includes at least one of index number information of a transmitting user equipment of the first SL-PRS, and index number information of a receiving user equipment of the first SL-PRS.

117.
The apparatus according to claim 98, wherein the first cast type information is used to indicate that the first SL-PRS is at least one type of unicast, multicast and broadcast.

**118.**

The apparatus according to claim 98, wherein the first measurement reporting information is used to indicate that a measurement report related to the first SL-PRS is transmitted to a location management function (LMF) device, or to the second user equipment, or to a third user equipment other than the first user equipment and the second user equipment, or to the network device.

**119.**

The apparatus according to claim 97, further comprising:

a first determination unit used to determine a target resource location based on the first control information; and
a second transmission unit used to transmit the first SL-PRS at the target resource location.

**120.**

The apparatus according to claim 119, further comprising:

a second determination unit used to determine sidelink positioning information for the first user equipment according to the first SL-PRS.

**121.**

An information transmission apparatus, comprising:

a first receiving unit used to receive first control information transmitted by a first device; wherein the first control information is used to schedule a first SL-PRS;
wherein the first device is a network device or a second user equipment, and the first control information is information related to a transmission resource of the first SL-PRS.

**122.**

The apparatus according to claim 121, wherein the first control information includes at least one of the following:

first resource pool information;
first time-frequency resource information, wherein the first time-frequency resource information is information of time-frequency resources occupied by the first SL-PRS;
second time-frequency resource information, wherein the second time-frequency resource information is information of time-frequency resource occupied by a physical sidelink control channel (PSCCH);
first pattern information, wherein the first pattern information is pattern information related to the first SL-PRS;
first time interval information;
first priority information;
first location information;
first index number information, wherein the first index number information is index number information of the first SL-PRS;
second index number information, wherein the second index number information is index number information of the user equipment;
first cast type information; and
first measurement reporting information.

**123.**

The apparatus according to claim 122, wherein the first resource pool information includes type information of a first resource pool, and the type information is used to indicate that the first resource pool includes a dedicated resource pool and/or a shared resource pool;

and/or, the first resource pool information includes index number information of the first resource pool;
and/or, the first resource pool is at least one resource pool configured for the first SL-PRS.

**124.**

The apparatus according to claim 123, wherein the dedicated resource pool is a resource pool dedicated to the first SL-PRS and channels related to an SL-PRS; and/or, the shared resource pool is a resource pool shared by the first SL-PRS and channels related to sidelink communication.

**125.**

The apparatus according to claim 122, wherein the first control information is first downlink control information or first sidelink control information;

and/or, the first control information is carried by a first control channel or a second control channel; the first control channel is physical downlink control channel (PDCCH), and the second control channel is PSCCH.

**126.**

The apparatus according to claim 122, wherein the first time-frequency resource information includes at least one of information of time domain resources occupied by the first SL-PRS and information of frequency domain resources occupied by the first SL-PRS.

**127.**

The apparatus according to claim 126, wherein the information of time domain resources occupied by the first SL-PRS includes at least one of a starting orthogonal frequency division multiplex (OFDM) symbol index number, an ending OFDM symbol index number, and the number of OFDM symbols occupied by the first SL-PRS;

and/or, the information of frequency domain resources occupied by the first SL-PRS includes at least one of a starting physical resource block (PRB) index number, an ending PRB index number, the number of PRBs, a starting subchannel index number, an ending subchannel index number, and the number of subchannels occupied by the first SL-PRS.

**128.**

The apparatus according to claim 122, wherein the second time-frequency resource information includes at least one of information of time domain resources occupied by the PSCCH and information of frequency domain resources occupied by the PSCCH.

**129.**

The apparatus according to claim 128, wherein the PSCCH is associated with the first SL-PRS, and the PSCCH indicates information of time-frequency resources occupied by the first SL-PRS.

**130.**

The apparatus according to claim 128, wherein the information of the time domain resources occupied by the PSCCH includes at least one of a starting OFDM symbol index number, an ending OFDM symbol index number, and the number of OFDM symbols occupied by the PSCCH;

and/or, the information of the frequency domain resources occupied by the PSCCH includes at least one of a starting PRB index number, an ending PRB index number, the number of PRBs, a starting subchannel index number, an ending subchannel index number, and the number of subchannels occupied by the PSCCH.

**131.**

The apparatus according to claim 127 or 130, wherein the OFDM symbol index number includes at least one of an OFDM symbol index number within a slot, an OFDM symbol index number within a subframe, and an OFDM symbol index number within a radio frame.

**132.**

The apparatus according to claim 131, wherein the OFDM symbol index number in the radio frame includes: a system frame number, a slot number, and an OFDM symbol index number in the slot.

**133.**

The apparatus according to claim 122, wherein the first pattern information includes at least one of resource element offset information, comb information, and mapping pattern information.

**134.**

The apparatus according to claim 133, wherein the resource element offset information includes at least one of a resource element offset and a resource element offset sequence;

and/or, the comb information includes at least one of a comb size and a comb index number.

**135.**

The apparatus according to claim 122, wherein the first time interval information is a slot offset or time interval between a slot where the first control information is located and transmission or first transmission of the first SL-PRS.

**136.**

The apparatus according to claim 122 or 135, wherein a slot for transmission or first transmission of the first SL-PRS is a first sidelink slot whose starting time of a corresponding resource pool is no earlier than $T_1 - T_2/2 + M \times T_3$;

where $T_1$ is a starting time of downlink slot carrying corresponding first control information;
$T_2$ is a timing advance value corresponding to a timing advance group (TAG) of a service cell that receives the first control information;
M is a slot offset or time interval between the slot where the first control information is located and the transmission or first transmission of the first SL-PRS;
$T_3$ is a duration of the sidelink slot.

**137.**
The apparatus according to claim 122, wherein the first priority information is information related to transmission priority of the first SL-PRS.

**138.**
The apparatus according to claim 122, wherein the first location information includes at least one of a zone identifier of a transmitting user equipment of the first SL-PRS and a zone identifier of a receiving user equipment of the first SL-PRS.

**139.**
The apparatus according to claim 122, wherein the first index number information includes at least one of index number information of a first SL-PRS resource, and index number information of a first SL-PRS resource set.

**140.**
The apparatus according to claim 122, wherein the second index number information includes at least one of index number information of a transmitting user equipment of the first SL-PRS, and index number information of a receiving user equipment of the first SL-PRS.

**141.**
The apparatus according to claim 122, wherein the first cast type information is used to indicate that the first SL-PRS is at least one type of unicast, multicast and broadcast.

**142.**
The apparatus according to claim 122, wherein the first measurement reporting information is used to indicate that a measurement report related to the first SL-PRS is transmitted to a location management function (LMF) device, or to the second user equipment, or to a third user equipment other than the first user equipment and the second user equipment, or to the network device.

**143.**
The apparatus according to claim 121, further comprising:

a third determination unit used to determine a target resource location based on the first control information; and
a second receiving unit used to receive the first SL-PRS at the target resource location.

**144.**
The apparatus according to claim 143, further comprising:
a fourth determination unit used to determine sidelink positioning information for the first user equipment according to the first SL-PRS.

**145.**
A non-transitory readable storage medium, comprising a computer program stored thereon; wherein the computer program is used to cause a processor to execute the information transmission method according to any one of claims 1 to 48.

network device

user equipment ↔ user equipment

FIG. 1

user equipment 2

SL-PRS1

measurement result

SL-PRS2

measurement result

user equipment 1

user equipment 3

SL-PRS3

measurement result

user equipment 4

FIG. 2

transmitting first control information to a first user equipment; where the first control information is used to schedule a first sidelink positioning reference signal (SL-PRS), the first device is a network device or a second user equipment, and the first control information is information related to a transmission resource of the first SL-PRS

31

FIG. 3

receiving first control information transmitted by a first device; where the first control information is used to schedule a first SL-PRS, and the first device is a network device or a second user equipment, and the first control information is information related to transmission resources of the first SL-PRS

41

FIG. 4

sidelink
synchronization slot ⇨

SL-PRS
dedicated resource pooL
(resource pooL index 1) ⇨

SL-PRS
shared resource pooL
(resource pooL index 0) ⇨

all available
slots for
sidelink ⇨

slot

0 1 2 3 4 5 6 7 8 9 10 11 12 13 14 15 16 17 18 19

FIG. 5

one OFDM symbol

time

1 2 3 4 5 6 7 8 9 10 11 12 13 14

one PRB

12

11

frequency 10

9

8

7

6

5

4

3

2

1

A G C

first SL-PRS

second control
channel

G P

FIG. 6

FIG. 7

one OFDM symbol

time

one PRB

| | 1 | 2 | 3 | 4 | 5 | 6 | 7 | 8 | 9 | 10 | 11 | 12 | 13 | 14 |

frequency

A
G
C

first SL-PRS

subchannel #3

second control
channel

first SL-PRS

subchannel #2

first SL-PRS

subchannel #1

G
P

FIG. 8

5  6  7  8

one subcarrier

5  6  7  8

one PRB

first SL-PRS

second SL-PRS

third SL-PRS

fourth SL-PRS

FIG. 9

downlink
time

first base station transmits
first control information

0ms  1ms  2ms  3ms  4ms  5ms  6ms  7ms

downlink slot

one downlink slot

0ms  1ms  2ms  3ms  4ms  5ms  6ms  7ms

sidelink slot

one sidelink slot

4

first UE
transmits SL-
PRS

sidelink time

FIG. 10

longitude

FIG. 11

FIG. 12

FIG. 13

143

processor

141

memory

bus interface

transceiver

142

144

user interface

FIG. 14

151

first transmission unit

FIG. 15

161

first receiving unit

FIG. 16

**EP 4 694 507 A1**

## INTERNATIONAL SEARCH REPORT

International application No.

**PCT/CN2024/080229**

### A. CLASSIFICATION OF SUBJECT MATTER

H04W 72/40(2023.01)i

According to International Patent Classification (IPC) or to both national classification and IPC

### B. FIELDS SEARCHED

Minimum documentation searched (classification system followed by classification symbols)

IPC: H04W72/-

Documentation searched other than minimum documentation to the extent that such documents are included in the fields searched

Electronic data base consulted during the international search (name of data base and, where practicable, search terms used)

CNTXT, CNABS, CNKI: 侧链路, 直通, 定位参考信号, 传输, 调度, 资源, 控制, SL-PRS, SPRS; VEN, USTXT, WOTXT, EPTXT, 3GPP: Sidelink, Positioning Reference Signal, Transmission, Schedule, Resource, Control, SL-PRS, SPRS

### C. DOCUMENTS CONSIDERED TO BE RELEVANT

| Category* | Citation of document, with indication, where appropriate, of the relevant passages | Relevant to claim No. |
|---|---|---|
| X | CN 112583553 A (DATANG MOBILE COMMUNICATIONS EQUIPMENT CO., LTD.) 30 March 2021 (2021-03-30) description, paragraphs [0106]-[0111] | 1-145 |
| A | CN 115706627 A (CITIC ZHILIAN TECHNOLOGY CO., LTD.) 17 February 2023 (2023-02-17) entire document | 1-145 |
| A | US 2021014848 A1 (DAVYDOV ALEXEI et al.) 14 January 2021 (2021-01-14) entire document | 1-145 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 April 2024** | **10 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/080229**

| Patent document cited in search report | | | Publication date (day/month/year) | Patent family member(s) | | | Publication date (day/month/year) |
|---|---|---|---|---|---|---|---|
| CN | 112583553 | A | 30 March 2021 | WO | 2021057232 | A1 | 01 April 2021 |
| | | | | EP | 4037226 | A1 | 03 August 2022 |
| | | | | US | 2022321294 | A1 | 06 October 2022 |
| | | | | EP | 4037226 | A4 | 23 November 2022 |
| | | | | CN | 112583553 | B | 08 February 2022 |
| CN | 115706627 | A | 17 February 2023 | WO | 2023011347 | A1 | 09 February 2023 |
| | | | | KR | 20240032066 | A | 08 March 2024 |
| US | 2021014848 | A1 | 14 January 2021 | US | 11671954 | B2 | 06 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310367788